(19) Europäisches Patentamt
European Patent Office
Office européen des brevets

(11) **EP 3 010 765 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **14725028.6**

(22) Anmeldetag: **30.04.2014**

(51) Int Cl.:
**B60R 21/274** (2011.01)    **B60R 21/017** (2006.01)

(86) Internationale Anmeldenummer:
**PCT/EP2014/058933**

(87) Internationale Veröffentlichungsnummer:
**WO 2014/202270 (24.12.2014 Gazette 2014/52)**

(54) **VORRICHTUNG ZUM BETREIBEN EINES KALTGASGENERATORS FÜR EIN FAHRZEUG**

DEVICE FOR CONTROLLING A COLD GAS GENERATOR FOR A VEHICLE

DISPOSITIF POUR COMMANDER UN GÉNÉRATEUR DE GAZ FROID POUR VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2013 DE 102013211421**

(43) Veröffentlichungstag der Anmeldung:
**27.04.2016 Patentblatt 2016/17**

(73) Patentinhaber: **Robert Bosch GmbH**
**70442 Stuttgart (DE)**

(72) Erfinder:
• **KARNER, Ruediger**
**70806 Kornwestheim (DE)**
• **SCHUMACHER, Hartmut**
**71691 Freiberg (DE)**
• **NITSCHKE, Werner**
**71679 Asperg (DE)**

(56) Entgegenhaltungen:
**DE-A1- 10 147 884        DE-A1- 19 857 919**
**DE-A1-102011 087 077    US-A- 5 362 100**
**US-A- 5 796 177          US-A- 5 820 162**

**Beschreibung**

Stand der Technik

Die vorliegende Erfindung bezieht sich auf eine Vorrichtung zum Betreiben eines Kaltgasgenerators für eine Sicherheitseinrichtung für ein Fahrzeug, auf eine Sicherheitsvorrichtung für ein Fahrzeug und auf ein Verfahren zum Steuern einer Vorrichtung zum Betreiben eines Kaltgasgenerators.

Kaltgasgeneratoren kommen beispielsweise in Seitenairbags zur Anwendung. In diesen Systemen wird ein unter hohem Druck, beispielsweise von 300bar bis 1200 bar, stehendes Gas, wie Stickstoff durch eine pyrotechnisch öffnende Verschlusseinrichtung zur Ausströmung in den Airbag gebracht. Der pyrotechnische Zündkreis von Kaltgasgeneratoren unterscheidet sich elektrisch nicht von Zündkreisen herkömmlicher Heißgasgeneratoren.

Die DE 10 2011 087077 A1 offenbart ein Verfahren zur Ansteuerung von mindestens einem Auslöseelement für ein Personenschutzmittel. Dabei wird eine Parallelschaltung aus einer Diode und einer Spule oder alternativ einer Zündpille eingesetzt. Die US 5 820 162 A offenbart einen Gasgenerator für ein Airbagsystem. Die US 5 796 177 A offenbart eine Zündschaltung für eine Mehrzahl von Personenschutzmitteln.

Offenbarung der Erfindung

Vor diesem Hintergrund wird mit der vorliegenden Erfindung eine Vorrichtung zum Betreiben eines Kaltgasgenerators für eine Sicherheitseinrichtung für ein Fahrzeug, eine Sicherheitsvorrichtung für ein Fahrzeug und ein Verfahren zum Steuern einer Vorrichtung zum Betreiben eines Kaltgasgenerators gemäß den Hauptansprüchen vorgestellt. Vorteilhafte Ausgestaltungen ergeben sich aus den jeweiligen Unteransprüchen und der nachfolgenden Beschreibung.

Eine Auslassöffnung eines Behälters eines Kaltgasgenerators kann durch ein Verschlusselement und zusätzlich durch eine Verschlusseinrichtung verschlossen sein. Das Verschlusselement kann unter Verwendung einer Zündeinrichtung dauerhaft geöffnet werden. Die Verschlusseinrichtung kann wieder verschließbar ausgeführt sein, sodass der Behälter auch nach Öffnen des Verschlusselements wieder verschlossen werden kann. Zum Betreiben des Kaltgasgenerators, also zum Auslassen von Gas aus dem Behälter des Kaltgasgenerators, ist es somit erforderlich, dass sowohl das Verschlusselement als auch die Verschlusseinrichtung geöffnet werden, um das Auslassen von Gas aus dem Behälter zu ermöglichen. Die Verschlusseinrichtung kann unter Verwendung einer Spule betätigt werden.

Die Verschlusseinrichtung kann so ausgeführt werden, dass nach dem Öffnen des Verschlusselementes ein definierter Basisdurchsatz von Gas ausströmt und durch die Betätigung der Verschlusseinrichtung dieser Durchsatz zwischen einem Minimalwert (Basisdurchsatz) und Maximalwert verändert werden kann.

Durch eine geeignete Verschaltung der Zündeinrichtung zum Öffnen des Verschlusselements und der Spule zum Betätigen der Verschlusseinrichtung können zwei Anschlussleitungen sowohl zum Ansteuern der Zündeinrichtung als auch zum Ansteuern der Spule ausreichen.

Vorteilhafterweise kann ein Ausströmen des Gases aus dem Behälter des Kaltgasgenerators durch die Verschlusseinrichtung gesteuert werden. Dadurch kann beispielsweise eine Füllmenge oder ein zeitlicher Verlauf eines Aufblasens eines Airbags, der unter Verwendung des Kaltgasgenerators gefüllt wird, gesteuert werden. Es ist also eine Adaption einer Sicherheitseinrichtung, beispielsweise eines Airbags möglich, ohne dass ein mehrstufiger Aufbau aus mehreren Gasgeneratoren zur Adaption der Füllmenge erforderlich ist. Dabei kann zur Adaption unter Verwendung eines Kaltgasgenerators auf eine Trennung einer Funktion zur Öffnung des Verschlusselements, beispielsweise einer Membranöffnungsfunktion, von einer Funktion einer Durchlasssteuerung durch die Verschlusseinrichtung zurückgegriffen werden, wobei beide Funktionen gemeinsam unter Verwendung von nur zwei Anschlussleitungen aktiviert werden können.

Eine Vorrichtung zum Betreiben eines Kaltgasgenerators für eine Sicherheitseinrichtung für ein Fahrzeug, wobei der Kaltgasgenerator einen Behälter zum Speichern von Gas und der Behälter eine durch ein Verschlusselement verschlossene Auslassöffnung für das Gas aufweist, weist die folgenden Merkmale auf:

einen ersten Anschluss für eine erste Anschlussleitung zum Bereitstellen eines ersten Betriebsspannungspotenzials und einen zweiten Anschluss für eine zweite Anschlussleitung zum Bereitstellen eines zweiten Betriebsspannungspotenzials;

eine elektrischen Spule, die ausgebildet ist, um ansprechend auf einen Spulenstrom eine Verschlusseinrichtung zum Steuern eines Gasflusses durch die Auslassöffnung zu betätigen, wobei die Spule einen ersten Spulenkontakt und einen zweiten Spulenkontakt aufweist und zwischen den ersten Anschluss und den zweiten Anschluss geschaltet ist;

eine Zündeinrichtung, die ausgebildet ist, um ansprechend auf einen Zündstrom zu zünden, um das Verschlusselement zu öffnen, wobei die Zündeinrichtung einen ersten Zündkontakt und einen zweiten Zündkontakt aufweist und zwischen den ersten Anschluss und den zweiten Anschluss geschaltet ist; und eine Diode mit einem Anodenkontakt und einem Kathodenkontakt, wobei die Diode zwischen den ersten Anschluss (Kathode) und den zweiten Anschluss (Anode) geschaltet ist.

Bei dem Fahrzeug kann es sich beispielsweise um einen Personenkraftwagen, ein Lastkraftwagen oder ein Motorrad handeln. Unter einer Sicherheitseinrichtung kann eine Einrichtung des Fahrzeugs verstanden werden, die ausgebildet ist, um die Insassen, das Fahrzeug oder weitere Verkehrsteilnehmer vor Schaden zu bewahren. Darunter fällt beispielsweise ein Überrollbügel, eine aktive Motorhaube, ein aktiver Fahrzeugsitz, eine Einrichtung zum Straffen eines Sicherheitsgurts oder ein Airbag. Die Sicherheitseinrichtung kann ihre Schutzwirkung entfalten, indem sie durch ausströmendes Gas aus dem Behälter des Kaltgasgenerators aktiviert wird. Indem die Auslassöffnung des Behälters durch das Verschlusselement verschlossen ist, kann das unter Druck stehende Gas dauerhaft in dem Behälter gespeichert werden, bis das Verschlusselement geöffnet wird. Eine Öffnung des Verschlusselements kann irreversibel sein.

Der erste Anschluss und der zweite Anschluss können eine Zweidrahtschnittstelle darstellen. Über die erste und die zweite Anschlussleitung können der erste und der zweite Anschluss mit einer Spannungsversorgungseinrichtung verbunden werden. Unter verbunden kann elektrisch leitfähig verbunden verstanden werden. Eine solche elektrisch leitfähige Verbindung kann als eine Direktverbindung, beispielsweise über eine elektrische Leitung oder Leiterbahn ausgeführt sein.

Die Verschlusseinrichtung kann einen induktiven Aktuator, beispielsweise in Form eines Magnetventils darstellen. Die elektrische Spule kann Teil der Verschlusseinrichtung sein. Die Spule kann ausgebildet sein, um die Verschlusseinrichtung ansprechend auf den durch die Spule fließenden Spulenstrom so zu betätigen, dass die Verschlusseinrichtung die Auslassöffnung des Behälters öffnet. Ferner kann die Spule ausgebildet sein, um nach dem Abschalten einer den Spulenstrom erzeugenden Betriebsspannung durch Selbstinduktion den Stromfluss in der ursprünglichen Richtung fortzusetzen. Der durch die Spule induzierte Strom oder eine daraus resultierende induzierte Spannung können können durch eine Freilaufdiode abgebaut werden. Ferner kann der durch die Spule induzierte Strom durch die Zündeinrichtung geführt und als Zündstrom für die Zündeinrichtung verwendet werden.

Unter einer Zündeinrichtung kann beispielsweise ein Brückenzünder oder eine Zündpille verstanden werden. Die Zündeinrichtung kann einen Draht aufweisen, der durch den Zündstrom erhitzt wird. Durch Erhitzen des Drahts kann ein Brandmittel entzündet werden, wodurch weitere Hitze oder Energie zum Öffnen des Verschlusselements bereitgestellt werden kann.

Die Diode kann parallel oder in Reihe zu der Zündeinrichtung geschaltet sein. In der Reihenschaltung kann der Anodenkontakt der Diode dem zweiten Anschluss und der Kathodenkontakt kann dem ersten Anschluss zugewandt sein. Beispielsweise kann der Anodenkontakt direkt oder über die noch nicht gezündete Zündeinrichtung mit dem zweiten Anschluss verbunden sein. Entsprechend kann der Kathodenkontakt direkt oder über die noch nicht gezündete Zündeinrichtung mit dem ersten Anschluss verbunden sein.

Gemäß einer Ausführungsform sind die Zündeinrichtung und die Diode in Reihe zwischen den ersten Anschluss und den zweiten Anschluss geschaltet. Dabei kann beispielsweise der erste Zündkontakt mit dem ersten Anschluss verbunden sein oder es kann der zweite Zündkontakt mit dem zweiten Anschluss verbunden sein. Durch die Diode kann verhindert werden, dass nach Zündung der Zündeinrichtung weiterhin Strom durch die Zündeinrichtung fließt, wenn die Zündeinrichtung nach der Zündung weiterhin elektrisch leitend sein sollte.

Bei einer solchen Ausführungsform kann die Vorrichtung eine beispielsweise als Suppressor-Diode (TAZ auch TVS = Transient Absorption Zenerdiode) ausgeführte Freilaufdiode aufweisen, die zwischen den zweiten Anschluss und dem zweiten Betriebsspannungspotenzial geschaltet ist. Über eine solche Freilaufdiode kann ein von der Spule durch Selbstinduktion induzierter Strom (weiter) abgebaut werden, nachdem ein Abbau über das Zündelement der Zündeinrichtung nach dessen Zündung und wahrscheinlicher Unterbrechung nicht mehr möglich ist. Die Durchbruchsspannung der Suppressor-Diode ist mit einem Sicherheitsabstand zur höchsten Fahrzeugspannung gewählt, aber geringer als die maximal zulässige Spannung an der gesperrten Low-Side.

Zusätzlich oder alternativ kann die Vorrichtung eine weitere Suppressor-Diode (TAZ auch TVS = Transient Absorption Zenerdiode) aufweisen, die parallel zu der Zündeinrichtung und in Serie zu der Diode geschaltet ist. Die beiden Dioden sind einander entgegengesetzt gepolt angeordnet. Über die Serienschaltung aus den beiden Dioden kann ein von der Spule induzierter Strom bei elektrisch unterbrochenen Zündelement durch den Durchbruchsbetrieb der Suppressor-Diode abgebaut werden.

Die Vorrichtung kann zusätzlich oder alternativ eine weitere Diode aufweisen, die zwischen einem mit der zweiten Anschlussleitung verbundenen Anschlusskontakt und einer Einrichtung zum Bereitstellen des zweiten Betriebsspannungspotenzials mit dem Anodenanschluss der Diode an das zweite Betriebsspannungspotenzials (Masse) geschaltet ist. Mit anderen Worten kann zwischen dem Anschlusskontakt der Einrichtung (Low-Side Powerstage) eine Diode (Suppressordiode) mit dem Anodenanschluss an Masse geschaltet sein.

Alternativ kann die Supressordiode an alternativer Stelle angeordnet sein.

Gemäß einer Ausführungsform kann die Diode parallel zu der Spule und parallel zu der Zündeinrichtung zwischen den ersten Anschluss und den zweiten Anschluss geschaltet sein. Ein solches Ausführungsbeispiel ermöglicht eine schnelle Zündung der Zündeinrichtung. Über die Diode kann ein von der Spule induzierter Strom abgebaut werden. Bei dieser Ausführungsform muss aber ein erhöhter Strom bereitgestellt werden, da sowohl Strom in das Zündelement als auch Strom in die Spule des Magnetventils der Verschlusseinrichtung fließt. Gemäß einer Ausführungsform kann eine weitere Diode (Suppressor-Diode) vorgesehen sein, die parallel zu der Zündeinrichtung und in Serie zu der Diode geschaltet ist, wobei die Anode der weiteren Diode mit dem ersten Zündkontakt der Zündeinrichtung und dem ersten Anschluss verbunden ist. Die Kathode der weiteren Diode mit dem zweiten Zündkontakt. Dieser wiederum ist mit der Kathode der Diode verbunden und diese Diode mit dem zweiten Anschluss.

Die Vorrichtung kann eine erste Einrichtung zum Bereitstellen des ersten Betriebsspannungspotenzials und eine zweite Einrichtung zum Bereitstellen des zweiten Betriebsspannungspotenzials aufweisen. Ein Anschlusskontakt der ersten Einrichtung kann über die erste Anschlussleitung mit dem ersten Anschluss und ein Anschlusskontakt der zweiten Einrichtung kann über die zweite Anschlussleitung mit dem zweiten Anschluss verbunden werden. Die erste Einrichtung kann eine Spannungsquelle umfassen. Die zweite Einrichtung kann als ein Masseanschluss ausgeführt sein. Die erste Einrichtung kann einen High-Side-Schalter, beispielsweise in Form eines Transistors, umfassen. Die zweite Einrichtung kann einen Low-Side-Schalter, beispielsweise in Form eines Transistors, umfassen. High-Side kann bedeuten, dass die der High-Side zugeordneten Einrichtungen in einem Stromkreis in einer Stromflussrichtung von einer Energiequelle zu einem Massepotenzial vor der Spule angeordnet sind. Entsprechend kann Low-Side bedeuten, dass die der Low-Side zugeordneten Einrichtungen in einem Stromkreis in einer Stromflussrichtung von einer Energiequelle zu einem Massepotenzial nach der Spule angeordnet sind.

Die Vorrichtung kann eine Erfassungseinrichtung aufweisen, die ausgebildet ist, um einen Wert eines durch den ersten Anschluss fließenden Stroms zu erfassen. Die Erfassungseinrichtung kann als eine Strommesseinrichtung ausgeführt sein.

Der Wert des Stroms kann eine Stromstärke des Stroms, beispielsweise in mA, angegeben sein. Beispielsweise kann die Erfassungseinrichtung ausgebildet sein, um einen in den ersten Anschluss eingespeisten Strom zu erfassen. Ferner kann die Vorrichtung eine Einstelleinrichtung aufweisen, die ausgebildet ist, um den Strom abhängig von dem Wert einzustellen. Beispielsweise kann die Einstelleinrichtung ausgebildet sein, um den Strom zu unterbrechen oder zu ermöglichen. Ferner kann die Einstelleinrichtung ausgebildet sein, um eine Stromstärke einzustellen. Die Vorrichtung kann ferner eine Ermittlungseinrichtung aufweisen, die ausgebildet ist, um abhängig von dem Wert des Stroms eine Zeitdauer zu ermitteln, während der das Verschlusselement und die Verschlusseinrichtung die Auslassöffnung freigeben, um Gas durch die Auslassöffnung ausströmen zu lassen. Beispielsweise kann die Ermittlungseinrichtung ausgebildet sein, um einen Zähler zum Ermitteln der Zeitdauer zu starten oder fortzusetzen, wenn der Wert des Stroms einen Schwellwert erreicht. Auf diese Weise kann eine Menge des aus dem Behälter ausströmenden Gases erfasst werden, ohne dass ein Drucksensor oder Strömungssensor erforderlich ist.

Gemäß einer Ausführungsform kann die Einstelleinrichtung ausgebildet sein, um den ersten Anschluss über die erste Anschlussleitung mit dem ersten Betriebsspannungspotenzial und den zweiten Anschluss über die zweite Anschlussleitung mit dem zweiten Betriebsspannungspotenzial zu verbinden, bis der Wert des Stroms einen maximalen Schwellwert erreicht. Ferner kann die Einstelleinrichtung ausgebildet sein, um den ersten Anschluss von dem ersten Betriebsspannungspotenzial und den zweiten Anschluss von dem zweiten Betriebsspannungspotenzial zu trennen Tennen, beispielsweise galvanisch oder insbesondere durch Sperren des High Side Stromreglers- und Low Side - Transistors, nachdem der Wert des Stroms den maximalen Schwellwert erreicht hat. Der maximale Schwellwert kann eine Stromstärke anzeigen, die erforderlich ist, um in der Spule genügend Energie zum Erzeugen des Zündstroms zu speichern.

Entsprechend kann die Spule ausgebildet sein, um nachdem der Wert des Stroms den maximalen Schwellwert erreicht und der erste Anschluss von dem ersten Betriebsspannungspotenzial und der zweite Anschluss von dem zweiten Betriebsspannungspotenzial getrennt wurde, den Zündstrom zum Zünden der Zündeinrichtung bereitzustellen. Dadurch sind keine separaten Leitungen zum Ansteuern der Zündeinrichtung und der Spule erforderlich.

Gemäß einer Ausführungsform kann die Einstelleinrichtung ausgebildet sein, um ansprechend auf ein Öffnungssignal den ersten Anschluss über die erste Anschlussleitung mit dem ersten Betriebsspannungspotenzial und den zweiten Anschluss über die zweite Anschlussleitung mit dem zweiten Betriebsspannungspotenzial zumindest einmal erneut zu verbinden, beispielsweise galvanisch oder insbesondere durch Ansteuerung des High Side und Low Side Transistors, nachdem der Wert des Stroms bis unter einem Schwellwert für den Spulenstrom zum Betätigen der Verschlusseinrichtung abgefallen ist. Auf diese Weise kann die Verschlusseinrichtung mehrmals geöffnet und wieder geschlossen und somit ein Gasstrom aus dem Behälter mehrmals unterbrochen bzw. freigegeben werden. Das Öffnungssignal kann beispielsweise von einer zentralen Steuereinrichtung oder von der Ermittlungseinrichtung bereitgestellt werden.

Eine Sicherheitsvorrichtung für ein Fahrzeug weist folgende Merkmale auf:

4

einen Kaltgasgenerator mit einem Behälter zum Speichern von Gas, wobei der Behälter eine durch ein Verschlusselement verschlossene Auslassöffnung für das Gas aufweist;

eine Verschlusseinrichtung zum Steuern eines Gasflusses durch die Auslassöffnung des Behälters zwischen einem Minimalwert (0 oder Basisdurchsatz) und einem Maximalwert (Maximaldurchsatz); und

eine genannte Vorrichtung zum Betreiben des Kaltgasgenerators, wobei die Spule dieser Vorrichtung ausgebildet ist, um die Verschlusseinrichtung zu betätigen.

Optional kann die Sicherheitsvorrichtung einen Bypass aufweisen, der einen Gas-Basisdurchsatz aus dem Behälter bei geöffnetem Verschlusselement zulässt.

Somit kann der erfindungsgemäße Ansatz vorteilhaft im Zusammenhang mit einem Kaltgasgenerator zum Aktivieren einer Sicherheitseinrichtung, beispielsweise eines Fahrzeugs eingesetzt werden.

Ein Verfahren zum Steuern einer Vorrichtung zum Betreiben eines Kaltgasgenerators für eine Sicherheitseinrichtung für ein Fahrzeug, wobei der Kaltgasgenerator einen Behälter zum Speichern von Gas und der Behälter eine durch ein Verschlusselement verschlossene Auslassöffnung für das Gas aufweist, und wobei die Vorrichtung einen ersten Anschluss für eine erste Anschlussleitung zum Bereitstellen eines ersten Betriebsspannungspotenzials und einen zweiten Anschluss für für eine zweite Anschlussleitung zum Bereitstellen eines zweiten Betriebsspannungspotenzials, eine elektrische Spule, die ausgebildet ist, um ansprechend auf einen Spulenstrom eine Verschlusseinrichtung zum Steuern eines Gasflusses durch die Auslassöffnung zu betätigen, wobei die Spule einen ersten Spulenkontakt und einen zweiten Spulenkontakt aufweist und zwischen den ersten Anschluss und den zweiten Anschluss geschaltet ist, eine Zündeinrichtung, die ausgebildet ist, um ansprechend auf einen Zündstrom zu zünden, um das Verschlusselement zu öffnen, wobei die Zündeinrichtung einen ersten Zündkontakt und einen zweiten Zündkontakt aufweist und zwischen den ersten Anschluss und den zweiten Anschluss geschaltet ist, und eine Diode mit einem Anodenkontakt und einem Kathodenkontakt, wobei die Diode zwischen den ersten Anschluss und den zweiten Anschluss geschaltet ist, aufweist, umfasst die folgenden Schritte:

Verbinden des ersten Anschlusses mit dem ersten Betriebsspannungspotenzial und des zweiten Anschlusses mit dem zweiten Betriebsspannungspotenzial, um einen Fluss eines Stroms zwischen dem ersten Anschluss und dem zweiten Anschluss zu erzeugen; und

Tennen des ersten Anschlusses von dem ersten Betriebsspannungspotenzial und des zweiten Anschlusses von dem zweiten Betriebsspannungspotenzial, nachdem ein Wert des Stroms einen maximalen Schwellwert erreicht hat, um einen Fluss des Zündstroms durch die Zündeinrichtung zu ermöglichen.

Gemäß einer Ausführungsform können die Schritte des Verbindens und Trennens folgendermaßen durchgeführt werden:

Verbinden (galvanisch oder insbesondere durch Ansteuerung des High Side Stromreglers und Low Side Transistors) des ersten Anschlusses mit dem ersten Betriebsspannungspotenzial und des zweiten Anschlusses mit dem zweiten Betriebsspannungspotenzial, um einen Fluss eines Stroms zwischen dem ersten Anschluss und dem zweiten Anschluss zu erzeugen, um einen sofortigen Fluss des Zündstroms durch die Zündeinrichtung und verstärkt nach dem Zünden durch die Spule der Verschlusseinrichtung zu ermöglichen; und

Tennen (Sperren [Gate mit zweitem Betriebspotenzial {niederohmig} verbinden, oder Gate mit Source {niederohmig} verbinden des High Side Stromreglers und (Sperren [Gate mit zweitem Betriebspotenzial {niederohmig} verbinden, oder Gate mit Source {niederohmig} des Low Side Transistors) des ersten Anschlusses von dem ersten Betriebsspannungspotenzial und des zweiten Anschlusses von dem zweiten Betriebsspannungspotenzial, nachdem ein Wert des Stroms einen maximalen Schwellwert (I_Fmax > I_AFmin)) für eine festgelegte Zeitdauer (t > T_AF) erreicht hat, um die Höhe des Stromes durch die Verschlusseinrichtung durch Freilauf über die Diode wieder unter den Haltestrom zu senken und die Verschlusseinrichtung wieder zu schließen.

Somit kann das Verbinden galvanisch oder durch Ansteuerung des High Side Stromreglers und Low Side Transistors durchgeführt werden. Das Trennen kann durch ein Sperren erfolgen. Dabei kann das das Gate mit dem zweitem Betriebspotenzial, beispielsweise niederohmig verbunden werden oder das Gate kann mit Source des High Side Stromreglers, beispielsweise niederohmig, verbunden werden. Ferner kann dazu das Gate mit dem zweiten Betriebspotenzial, beispielsweise niederohmig verbunden werden oder das Gate kann mit Source des Low Side Transistors, beispielsweise niederohmig verbunden werden.

Alternativ kann der Schritt des Trennens folgendermaßen durchgeführt werden: Tennen (galvanisch oder insbesondere durch Sperren [Gate mit zweitem Betriebspotenzial {niederohmig} verbunden, oder Gate mit Source {niederohmig} verbunden] des High Side Stromreglers) des ersten Anschlusses von dem ersten Betriebsspannungspotenzial und des zweiten Anschlusses (galvanisch oder insbesondere durch Sperren [Gate mit zweitem Betriebspotenzial {niederohmig} verbunden, oder Gate mit Source {niederohmig} verbunden] des Low Side Transistors) von dem zweiten Betriebsspannungspotenzial, nachdem ein Wert des Stroms einen maximalen Schwellwert erreicht hat, um einen Fluss des Zündstroms durch die Zündeinrichtung zu ermöglichen.

Im Schritt des Verbindens kann das Verbinden galvanisch oder insbesondere durch Ansteuerung des High Side Stromreglers und Low Side Transistors erfolgen. Ferner kann das Verbinden erfolgen, um einen sofortigen Fluss des Zündstroms durch die Zündeinrichtung und verstärkt nach dem Zünden durch die Spule der Verschlusseinrichtung zu ermöglichen.

Im Schritt des Trennens kann folgendes durchgeführt werden: Sperren [Gate mit zweitem Betriebspotenzial {niederohmig} verbinden, oder Gate mit Source {niederohmig} verbinden des High Side Stromreglers und (Sperren [Gate mit zweitem Betriebspotenzial {niederohmig} verbinden, oder Gate mit Source {niederohmig} des Low Side Transistor. Das Trennen kann durchgeführt werden, nachdem ein Wert des Stroms einen maximalen Schwellwert (I_Fmax> I_AFmin)) für eine festgelegte Zeitdauer (t > T_AF) erreicht hat, um die Höhe des Stromes durch die Verschlusseinrichtung durch Freilauf über die Diode wieder unter den Haltestrom zu senken und die Verschlusseinrichtung wieder zu schließen.

Durch Einspeisen des Stroms bis zu dem durch den maximalen Schwellwert vorgegebenen Wert, wird genügend Energie in die Spule der Verschlusseinrichtung zum öffnen gebracht, als auch durch den erzwungenen Abbau dieser Energie im Freilauf (Trennen [galvanisch oder insbesondere durch Sperren des High Side Stromreglers - und Low Side - Transistors] der Anschlüsse vom Betriebsspannungspotentials) in das Zündelement der Zündeinrichtung, wodurch das Verschlusselement irreversibel öffnet. Dadurch kommt es erstmalig zu einem geöffneten Verschlusselement und der zeitlich überlappend geöffneten Verschlusseinrichtung.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:

Fig. 1    eine schematische Darstellung eines Fahrzeugs mit einem Sicherheitssystem gemäß einem Ausführungsbeispiel der vorliegenden Erfindung;

Fig. 2    ein Ablaufdiagramm eines Verfahrens zum Betreiben eines Kaltgasgenerators für eine Sicherheitseinrichtung gemäß einem Ausführungsbeispiel der vorliegenden Erfindung;

Fig. 3    eine schematische Darstellung einer Vorrichtung zum Betreiben eines Kaltgasgenerators gemäß einem Ausführungsbeispiel der vorliegenden Erfindung;

Fig. 4    ein Signalverlauf eines Verfahrens zum Betreiben eines Kaltgasgenerators gemäß einem Ausführungsbeispiel der vorliegenden Erfindung;

Fig. 5    ein Signalverlauf eines Verfahrens zum Betreiben eines Kaltgasgenerators gemäß einem Ausführungsbeispiel der vorliegenden Erfindung;

Fig. 6    eine schematische Darstellung einer Vorrichtung zum Betreiben eines Kaltgasgenerators gemäß einem Ausführungsbeispiel der vorliegenden Erfindung; und

Fig. 7    eine schematische Darstellung einer Vorrichtung zum Betreiben eines Kaltgasgenerators gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

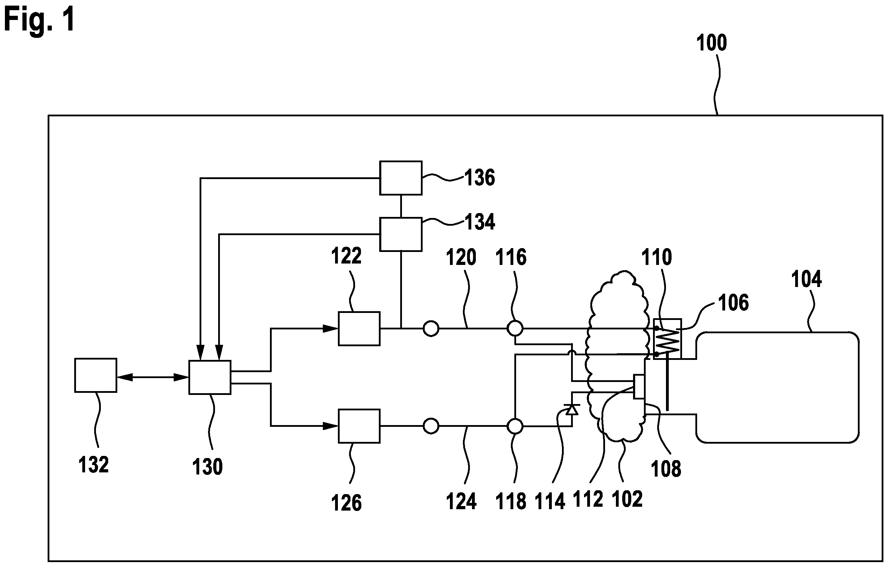

Fig. 1 zeigt eine schematische Darstellung eines Fahrzeugs 100 mit einem Sicherheitssystem gemäß einem Ausführungsbeispiel der vorliegenden Erfindung. Das Sicherheitssystem weist eine Sicherheitseinrichtung, hier beispielhaft in Form eines Luftsacks oder Airbags 102 und einen Kaltgasgenerator zum Füllen des Airbags 102 mit Gas auf.

Der Kaltgasgenerator weist einen Behälter 104 auf. Im betriebsbereiten Zustand des Kaltgasgenerators ist in dem Behälter 104 ein unter Druck stehendes Gas gespeichert. Eine Auslassöffnung des Behälters 104 ist durch eine Verschlusseinrichtung 106, beispielsweise ein Magnetventil und ein Verschlusselement 108, beispielsweise eine Membran oder Scheibe, gasdicht verschlossen. Zum Betreiben des Kaltgasgenerators sind die Verschlusseinrichtung 106 und das Verschlusselement 108 zu öffnen. Das Verschlusselement 108 ist so konstruiert, dass es nach Öffnung dauerhaft geöffnet bleibt. Die Verschlusseinrichtung 106 ist so konstruiert, dass sie nach einer Öffnung wieder verschlossen werden kann. Die Verschlusseinrichtung kann auch einen Bypass aufweisen, der unabhängig vom Öffnen der Verschlusseinrichtung bei geöffnetem Verschlusselement einen Basisdurchfluss ermöglicht (Offset).

Das Sicherheitssystem weist ferner eine Vorrichtung zum Betreiben des Kaltgasgenerators auf. Die Vorrichtung ist ausgebildet, um einen Gasstrom durch die Auslassöffnung des Behälters 104 von dem Behälter 104 in den Airbag 102 hinein zu ermöglichen. Gemäß diesem Ausführungsbeispiel ist die Vorrichtung ausgebildet, um den Gasstrom anzupassen, beispielsweise eine Gesamtmenge des ausströmenden Gases oder einen zeitlichen Verlauf des Ausströmens des Gases zu steuern. Dadurch kann das Sicherheitssystem adaptiv ausgelegt werden. Beispielsweise kann die Vorrichtung ausgebildet sein, um den Kaltgasgenerator ansprechend auf eine Kollision des Fahrzeugs zu betätigen und anschließend einen Verlauf des Ausströmens des Gases abhängig von einer Art oder einem Verlauf der Kollision zu steuern.

Gemäß diesem Ausführungsbeispiel umfasst die Vorrichtung zum Betreiben des Kaltgasgenerators eine Spule 110, eine Zündeinrichtung 112, eine Diode 114 sowie einen ersten Anschluss 116 und einen zweiten Anschluss 118. Die Spule 110, die Zündeinrichtung 112 und die Diode 114 können in unterschiedlicher Verschaltung zwischen den ersten Anschluss 116 und den zweiten Anschluss 118 geschaltet sein. Gemäß dem in Fig. 1 gezeigten Ausführungsbeispiel ist die Spule 110 parallel zu einer Reihenschaltung aus der Diode 114 und der Zündeinrichtung 112 geschaltet.

Die Spule 110 ist mit der Verschlusseinrichtung 106 gekoppelt oder Teil der Verschlusseinrichtung 106 und ist ausgebildet, um die Verschlusseinrichtung 106 oder ein Schließteil der Verschlusseinrichtung 106 zu betätigen. Wird die Spule 110 ausreichend bestromt, so öffnet die Verschlusseinrichtung 106 die Auslassöffnung des Behälters 104. Wird die Bestromung der Spule 110 beendet, so wird die Auslassöffnung durch die Verschlusseinrichtung 106, beispielsweise getrieben durch eine Rückstellfeder, wieder verschlossen. Je nach Ausführung kann das Verschließen bis auf einen Gasdurchfluss von Null, also keinen Gasdurchfluss, oder bis auf einen Basisdurchfluss, vorgegeben durch eine Bypassöffnung, erfolgen.

Die Zündeinrichtung 112 ist mit dem Verschlusselement 108 gekoppelt und ausgebildet, um das Verschlusselement 108 zu öffnen, wenn die Zündeinrichtung 112 von einem Zündstrom durchflossen wird.

Gemäß diesem Ausführungsbeispiel ist die Diode 114 vorgesehen, um nach Zünden der Zündeinrichtung 112 einen Strom durch den Zweig der Zündeinrichtung 112 zu verhindern (Zündelement der Zündeinrichtung 112 kann kurzgeschlossen sein), wenn in den ersten Anschluss 116 ein Strom zum Betätigen der Verschlusseinrichtung 106 eingespeist wird. Die Diode 114 ist weiterhin vorgesehen um durch Freilauf (Energieabbau) der Spulen (112) - energie ein Zünden der Zündeinrichtung 112 zu ermöglichen. Alternativ kann die Diode 114, an anderer Stelle angeordnet, vorgesehen sein, um als reine Freilaufdiode einen von der Spule 110 durch Induktion generierten Stromfluss zu ermöglichen.

Gemäß einem Ausführungsbeispiel umfasst die Vorrichtung zum Betreiben des Kaltgasgenerators ferner eine erste Anschlussleitung 120, über die der erste Anschluss 116 mit einer Einrichtung 122 zum Bereitstellen eines ersten Betriebsspannungspotenzial, hier einer Betriebsspannung, elektrisch leitfähig verbunden ist. Ferner umfasst die Vorrichtung eine zweite Anschlussleitung 124 über die der zweite Anschluss 118 mit einer Einrichtung 126 zum Bereitstellen eines zweiten Betriebsspannungspotenzials, hier Masse, elektrisch leitfähig verbunden ist. Die Einrichtung 122 zum Bereitstellen des ersten Betriebsspannungspotenzials und die Einrichtung 126 zum Bereitstellen des zweiten Betriebsspannungspotenzials können durch eine Einstelleinrichtung 130 angesteuert werden. Die Einstelleinrichtung 130 kann ausgebildet sein, um von einem zentralen Steuergerät 132, beispielsweise einem Airbag-Steuergerät des Fahrzeugs ein Signal zu empfangen, das beispielsweise eine erfolgte Kollision des Fahrzeugs 100 anzeigt, und ausgebildet sein, um ansprechend auf das Signal die Einrichtungen 122, 126 anzusteuern.

Werden durch die Einrichtungen 122, 126 das erste und zweite Betriebsspannungspotenzial an die Anschlüsse 116, 118 angelegt, so wird durch die Spannungsdifferenz zwischen den Anschlüssen 116, 118 ein Spulenstrom durch die Spule 110 erzeugt. Die Diode 114 ist in Bezug zu der Spannungsdifferenz in Sperrrichtung gepolt, sodass durch die Zündeinrichtung 112 kein Strom fließt. Werden durch die Einrichtungen 122, 126 das erste und zweite Betriebsspannungspotenzial von den Anschlüssen 116, 118 getrennt, so wird durch die Spule 110 eine Spannung induziert, die durch die ebenfalls als Freilaufdiode wirkende Diode 114 einen Zündstrom durch das Zündelement der Zündeinrichtung 112 erzeugt. Ist das Zündelement so ausgebildet, dass ein Kurzschluss nach Aktivierung ausgeschlossen werden kann, besteht auch die Möglichkeit (Alternative) die Diode 114 parallel zur Spule 110 zu schalten (Kathode in Richtung Anschluss 116), welche nur als Freilaufdiode für die Spulen (110) -energie wirkt und damit kein relevanter Zündstrom beim Abschalten des Spulen (112) -stromes entstehen kann.

Diese Lösung erfordert einmalig eine höhere Stromabgabe der Einrichtung 122 um zu Beginn Zündstrom für die Zündeinrichtung (112) und die Spule (110) der Verschlusseinrichtung (106) bereitzustellen, um diese zu bestromen.

Gemäß einem Ausführungsbeispiel umfasst die Vorrichtung zum Betreiben des Kaltgasgenerators ferner eine Erfassungseinrichtung 134, die ausgebildet ist, um einen Wert, hier eine Stromstärke eines durch die erste Anschlussleitung abgegebenen Stromes in den Anschlusspunkt 116 zu erfassen. Dabei kann es sich um einen Strom handeln, der durch Anlegen des ersten und zweiten Betriebsspannungspotenzials an die Anschlüsse 116, 118 erzeugt wird. Die Erfassungseinrichtung 134 kann ausgebildet sein, um den Wert des Stroms oder einen Wert des Stroms repräsentierendes Signal bereitzustellen, beispielsweise an die Einstelleinrichtung 130 oder an eine Ermittlungseinrichtung 136. Dabei kann die Erfassungseinrichtung 134 ausgebildet sein, um den Wert oder ein entsprechendes Signal fortlaufend oder bei Erreichen eines oder mehrere vorgegebener Schwellwerte bereitzustellen. Beispielsweise kann die Einstelleinrichtung 130 ausgebildet sein, um das erste und zweite Betriebsspannungspotenzial von den Anschlüssen 116, 118 zu trennen (galvanisch oder insbesondere durch Sperren des High Side Stromreglers und Low Side - Transistors), wenn der Wert des Stroms einen Schwellwert erreicht oder überschreitet.

Die Ermittlungseinrichtung 136 ist ausgebildet, um eine Zeitdauer zu ermitteln, während der das Verschlusselement 108 und die Verschlusseinrichtung 106 die Auslassöffnung freigeben, um Gas durch die Auslassöffnung ausströmen zu lassen. Dabei ist die Ermittlungseinrichtung 136 ausgebildet, um die Zeitdauer abhängig auf dem von der Erfassungseinrichtung 134 erfassten Wert des Stroms zu ermitteln. Beispielsweise kann die Ermittlungseinrichtung 136 ausgebildet sein, um einen Zähler zu starten, wenn der ermittelte Wert des Stroms einen Schwellwert erreicht oder überschreitet und optional eine oder mehrere weitere Bedingungen erfüllt sind. Entsprechend kann die Ermittlungseinrichtung 136 ausgebildet sein, um den Zähler anzuhalten, wenn der ermittelte Wert des Stroms einen Schwellwert erreicht oder unterschreitet und zusätzlich oder alternativ eine oder mehrere weitere Bedingungen erfüllt sind. Ferner kann die Ermittlungseinrichtung 136 ausgebildet sein, um aus dem Zählerstand des Zählers oder der Zeitdauer eine Gasmenge zu bestimmen, die aus dem Behälter 104 ausgeströmt ist. In die Bestimmung der Gasmenge können vorbestimmte Parameter, beispielsweise bezüglich des Kaltgasgenerators und/oder des Airbags 102 einfließen (z.B. eine Offsetmenge die durch einen Bypass der Verschlusseinrichtung 106 zusätzlich abgegeben wird). Die Ermittlungseinrichtung 136 kann ausgebildet sein, um beispielsweise ein die Zeitdauer, den Zählerstand oder die Gasmenge repräsentierendes Signal an die Einstelleinrichtung 130 oder das Steuergerät 132 bereitzustellen. Beispielsweise kann die Einstelleinrichtung 130 ausgebildet sein, um die Betriebsspannungspotenziale erneut an die Anschlüsse 116, 118 bereitzustellen, wenn die bisher ausgeströmte Gasmenge noch nicht ausreichend ist.

Je nach konstruktiver Ausführungsform der Vorrichtung zum Betreiben des Kaltgasgenerators können beschriebene Elemente der Vorrichtung auch als Teil des Kaltgasgenerators oder der Steuervorrichtung realisiert sein.

Die gezeigte Schaltung kann in unterschiedlichen Ausführungsformen für einen Airbag 102 mit Kaltgas-Druckgefäß 104 eingesetzt werden. Dabei kann die Anzahl der Zündkreisleitungen 120, 124 von vier und mehr Leitungen reduziert werden, beispielsweise auf nicht mehr als zwei Leitungen 120, 124.

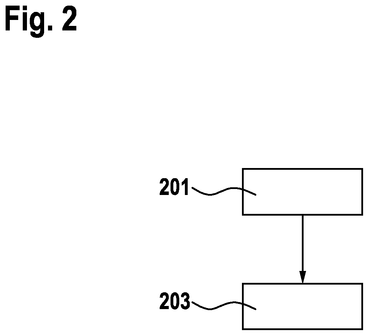

Fig. 2 zeigt ein Ablaufdiagramm eines Verfahrens zum Betreiben eines Kaltgasgenerators für eine Sicherheitseinrichtung gemäß einem Ausführungsbeispiel der vorliegenden Erfindung. Das Verfahren kann im Zusammenhang mit dem in Fig. 1 gezeigten Sicherheitssystem eingesetzt werden.

In einem Schritt 201 werden zwei Anschlüsse einer Parallelschaltung aus einer Spule und einer Zündeinrichtung, wie sie beispielhaft in Fig. 1 gezeigt sind, zwischen ein erstes Betriebsspannungspotenzial und ein zweites Betriebsspannungspotenzial geschaltet. Dadurch wird Stromfluss zwischen den Anschlüssen erzeugt. Der Stromfluss kann je nach Verschaltung der Spule und der Zündeinrichtung zum Aktivieren einer durch die Spule betätigbaren Verschlusseinrichtung und zusätzlich oder alternativ zum Zünden der Zündeinrichtung führen.

In einem Schritt 202 werden die Anschlüsse von den Betriebsspannungspotenzialen getrennt Tennen (galvanisch oder insbesondere durch Sperren des High Side Stromreglers und Low Side Transistors), wenn der Stromfluss einen maximalen Schwellwert erreicht. Gemäß einem Ausführungsbeispiel wird ein daraufhin von der Spule induzierter Strom als Zündstrom durch die Zündeinrichtung geleitet. Zusätzlich oder alternativ kann der induzierte Strom durch eine Freilaufdiode geleitet werden.

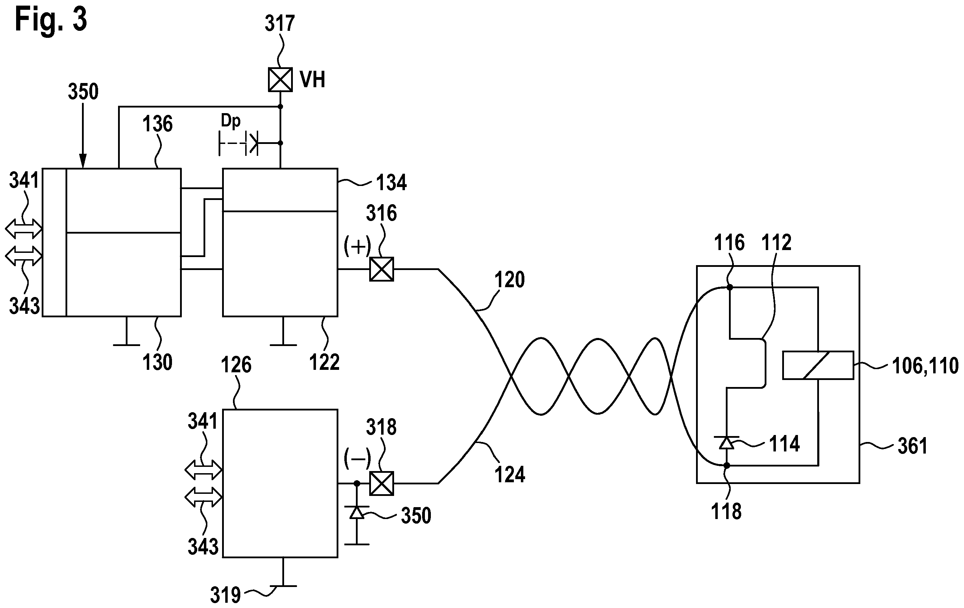

Fig. 3 zeigt eine schematische Darstellung einer Vorrichtung zum Betreiben eines Kaltgasgenerators gemäß einem Ausführungsbeispiel der vorliegenden Erfindung. Entsprechend zu dem in Fig. 1 gezeigten Ausführungsbeispiel weist die Vorrichtung zwischen einem ersten Anschluss 116 und einem zweiten Anschluss 118 eine Parallelschaltung aus einer Zündeinrichtung 112 und einer Spule 110 einer Verschlusseinrichtung 108 auf. Eine Diode 114 ist mit der Zündeinrichtung 112 in Reihe geschaltet. Ein Anodenkontakt der Diode 114 ist mit dem zweiten Anschluss 118 verbunden. Ein Kathodenkontakt der Diode 114 ist mit einem Anschluss der Zündeinrichtung 112 verbunden. Ein weiterer Anschluss der Zündeinrichtung 112 ist mit dem ersten Anschuss 116 verbunden. Ein Anschluss der Spule 110 ist mit dem ersten Anschluss 116 und ein weiterer Anschluss der Spule 110 ist mit dem zweiten Anschluss 118 verbunden.

Der erste Anschluss 116 ist über eine erste Leitung 120 mit einem Anschlusskontakt 316, hier einem Pluskontakt, einer Einrichtung 122 zum Bereitstellen eines ersten Betriebsspannungspotenzials 317 verbunden. Der zweite Anschluss 118 ist über eine zweite Leitung 124 mit einem Anschlusskontakt 318, hier einem Minuskontakt einer Einrichtung 126 zum Bereitstellen eines zweiten Betriebsspannungspotenzials 319 verbunden. Die Einrichtung 122 zum Bereitstellen eines ersten Betriebsspannungspotenzials ist gemäß diesem Ausführungsbeispiel als ein High-Side Stromregler ausgeführt und weist einen Transistor auf. Die Einrichtung 126 zum Bereitstellen eines zweiten Betriebsspannungspotenzials 319 ist gemäß diesem Ausführungsbeispiel als eine Low-Side Power Stage ausgeführt und weist einen Transistor auf. Die Einrichtung 126 weist eine Mikrokontrollerschnittstelle ($\mu$C) 341 und eine weitere Schnittstelle (SCON) 343 auf (statt zwei Schnittstellen kann auch eine gemeinsam genutzt werden). Die Einrichtung 122 ist ausgebildet, um gesteuert über die Schnittstellen 341, 343 den Anschlusskontakt 318 mit dem als Masse ausgeführten zweiten Bezugsspannungspotenzial 319 zu verbinden.

Die Einrichtung 122 zum Bereitstellen des ersten Betriebsspannungspotenzials 319, hier in Form einer Spannung VH, ist über eine Erfassungseinrichtung 134, die gemäß diesem Ausführungsbeispiel als eine Einrichtung zur Strommessung ausgeführt ist, mit einer Spannungsquelle zum Bereitstellen des ersten Bezugsspannungspotenzials 319 verbunden. Die Einrichtung 134 ist über Leitungen mit einer Ermittlungseinrichtung 136 und einer Einstelleinrichtung 130 verbunden. Gemäß diesem Ausführungsbeispiel ist die Ermittlungseinrichtung 136 als ein Stromzähler ausgeführt. Die Ermittlungseinrichtung 136 ist ausgebildet, um über einen Takteingang einen Takt 350 zum empfangen. Die Einstelleinrichtung 130 ist gemäß diesem Ausführungsbeispiel als ein Stromregler und als eine Einrichtung zur Sollwertvorgabe ausgeführt. Die Einstelleinrichtung 130 ist über eine oder zwei Leitungen mit der Einrichtung 122 verbunden und ist ausgeführt, um gesteuert über eine mit einer weiteren Mikrokontrollerschnittstelle ($\mu$C) 341 und einer weiteren Schnittstelle (SCON) 343 verbundene Ansteuerlogik sowie Daten von den Einrichtungen 134, 136 den Anschlusskontakt 316 mit dem ersten Bezugsspannungspotenzial 317 zu verbinden.

Eine weitere Diode 350, die als eine Freilauf-Supressordiode (Transient Absorption Zenerdiode) ausgeführt ist, ist zwischen den Kontaktanschluss 318 und dem zweiten Betriebsspannungspotenzial 319 geschaltet. Die Durchbruchsspannung (Zener-Spannung) ist deutlich überhalb den Fahrzeug-Betriebsspannungen gewählt (27... 36V) aber unterhalb der zulässigen Maximalspannung der Low-Side Endstufe 126. Die Kathode der weiteren Diode 350 ist mit dem Kontaktanschluss 318 verbunden.

Gemäß einem Ausführungsbeispiel ist die Zündeinrichtung als eine Zündpille 112 und die Verschlusseinrichtung als ein Magnetventil 110 ausgeführt. Die Zündpille kann zur pyrotechnischen Membranöffnung, beispielsweise eines Behälters eines Kaltgasgenerators verwendet werden. Das Magnetventil 110 kann als eine Durchlasssteuerung für beispielsweise aus einem solchen Behälter ausströmenden Gas verwendet werden. Die Diode 114 dient als Selektionsdiode zum Sperren und als Freilaufdiode zum induktiven Energieabbau. Die weitere Diode 350 dient als Freilauf-Suppressordiode zum induktiven Energieabbau nach Unterbrechung des Zündelementes der Zündeinrichtung.

Die beschriebene Schaltung mit einer Membranöffnungsfunktion, mittels eines pyrotechnischen Zündkreises, und mit magnetischer Ventiltechnik zur Durchlasssteuerung kann und wird gemäß den gezeigten Ausführungsbeispielen mit nur einer Zweidrahtschnittstelle 120, 124 ausgeführt.

Die Zweidrahtschnittstelle 120, 124 zur Aktivierung der pyrotechnischen Membranöffnungsfunktion sowie der Ventilsteuerung zur adaptiven Durchlasssteuerung wird im Folgenden anhand eines Ausführungsbeispiels näher beschrieben.

In Fig. 3 ist die grundsätzliche Anordnung einer Zweidrahtschnittstelle 120, 124 eines Zündkreises dargestellt. In einem Block 361 ist das Magnetventil 106 zur Durchlasssteuerung des Kaltgases parallel zu einer pyrotechnischen Zündeinrichtung 112 mit einer Diode 114 in Serie angeordnet. Die Diode 114 ist so geschaltet, dass bei Aktivierung des Zündkreises, d. h. der Aktivierung der Einrichtung 126 (Low-Side Power-Stage "ON") sowie der Aktivierung der Einrichtung 122 (High-Side-Stromregler "aktiv") zunächst ein Stromaufbau im Magnetventil 106 erfolgt. Die Zündeinrichtung 112, elektrisch wirksam dargestellt durch die Zündpille wird nicht von Strom durchflossen, da die Diode 114 sperrt. Mit Erkennung einer Stromhöhe I_Fmax (Strom Fire max), die einem maximalen Schwellwert entspricht, in der Einrichtung 134 zur Stromerfassung der High-Side-Endstufe mit den Einrichtungen 122, 134 erfolgt die Abschaltung der High-Side Endstufe durch Gate Anbindung nach Masse über einen aktiven Gate Transistor. Die Erkennung der Stromhöhe I_Fmax wird zum Nachweis gespeichert.

Die im Magnetventil 106 gespeicherte Energie wird nun über die Freilaufdiode 350 und den Zündpillenwiderstand der Zündeinrichtung 112 abgebaut. Die Festlegung von I_Fmax und der Induktivität des Magnetventils 106 ist so erfolgt, dass nach einer ausreichend kurzen Zeit, von beispielsweise 0.1ms bis 2ms, typischerweise 300$\mu$s, die Zündpille 112 zündet noch bevor ein Strom I_AFmin (Strom All Fire min) der Zündpille 112 unterschritten wird.

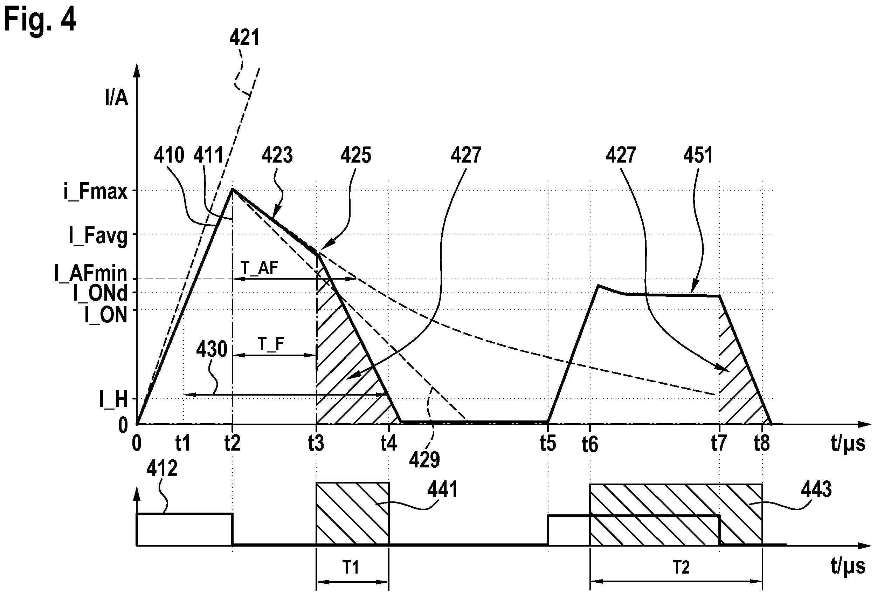

Mit der Bedingung I >= I_Fmax und der High- und Low-Side Endstufe "ON" wird in der Einrichtung 136 ein erster Zähler mit einer Schrittweite von 10$\mu$s bis 50$\mu$s gestartet. Dann erfolgt die Abschaltung der High- und Low-Side Endstufen 122, 126. Mit der Bedingung I >= I_AFmin und High- und Low-Side Endstufen 122, 126 "OFF" wird der erster Zähler gestoppt. Der Zählerstand des ersten Zählers repräsentiert worst case die Firezeit T_F (gezeigt in Fig. 4) der Zündpille 112. Für eine genaue Firezeit T_F ist die Steigung des abnehmenden Stromes I, den die High-Side Endstufe nach Abschaltung weiterhin abgibt, zu beobachten (Schrittweite 10μs...50μs); kommt es zu einer drastischen Steigungsänderung (425), (Faktor 2....8) ist das Zündelement unterbrochen und die Membran geöffnet und unter dieser Bedingung der Zähler 1 zu stoppen.

Mit dem Zünden der Zündpille 112 wird die Membran des unter hohem Druck stehenden Kaltgasreservoirs geöffnet. Das Magnetventil 106 ist ebenfalls geöffnet, da ein Strom I_ON, bei dem das Magnetventil 106 sicher öffnet, kleiner als I_Fmax und der Haltestrom I_H, bei dem das Magnetventil 106 gerade noch geöffnet bleibt, kleiner als I_AFmin gewählt wurden. Es strömt eine erste Kaltgasmenge aus und füllt einen Airbag.

Unterbricht die Zündpille 112 mit deren Aktivierung den Freilaufstrom des Magnetventils 106, wie es im Normalfall passiert, so erfolgt ein Zwangsfreilauf über die untertauchende High-Side Endstufe 122 (negatives source) und der Suppressordiode 150. Unterschreitet der Strom im Magnetventil 106 den Haltestrom I_H so wird der Gasstrom, der in den Airbag strömt, gesperrt oder bei vorhandenem Bypass der Verschlusseinrichtung auf einen Basiswert zurückgenommen.

Der Zwangsfreilauf des Magnetventils 106 von der Spannung VH des ersten Betriebsspannungspotenzials 317 über die High-Side Endstufe 122, das Magnetventil 106 und die Suppressordiode 350 werden unter folgenden Startbedingungen durch einen zweiten Zähler in der Einrichtung 136 erfasst:
High-Side Endstufe 122 ist logisch ausgeschaltet, d. h., das Gate ist mit Masse über Aushaltetransistor verbunden, und der Strom I <= I_AFmin .

Der zweite Zähler wird mit einer Schrittweite von 10μs bis 50μs inkrementiert, solange der Strom über dem Haltestrom I_H des Magnetventils 106 liegt.

Der Zählerstand des zweiten Zählers beinhaltet einen vernachlässigbar kleinen Anteil der Zündzeit T_F der Zündpille 112 sowie die Zeit T1 in der durch die geöffnete Verschlusseinrichtung (Magnetventil) 106, sowie falls vorhanden durch einen Bypass Gas in den Airbag 102 strömt..

Wie bereits beim Zähler 1 lässt sich der Fehler verursacht durch Anteile der Zündzeit T_F im Zählerstand 2 ganz vermeiden, falls der Start durch die oben angegebene Stoppbedingung des Zählers 1 erfolgt.

Entsprechend den Notwendigkeiten eines individuellen Crashs, der beispielsweise zur Aktivierung des Airbags führt, erfolgt nach einer Wartezeit, ein erneutes Ansteuern des Magnetventils 106 durch Einschaltung der High-Side und Low-Side Endstufen 122, 126.

Der Stromregler 130 der High-Side Endstufe 122 bekommt als Vorgabe (Regelwert) den Wert I_ONd, der einem Stromwert für das Magnetventil 106 "ON", also dem betätigten Magnetventil 106, inklusive Messtoleranz der vom Regler unabhängigen Stromerfassung (Nachweispflicht), entspricht.

Mit Überschreitung von I_ON ist das Magnetventil 106 sicher geöffnet und eine zweite Kaltgasmenge strömt aus. Die Zeitdauer der Gasausströmung wird nach Erfüllung der Startbedingungen: High- / Low-Side "ON" und I>=I_ON mit einer Schrittweite von 10μs bis 50μs auf Überschreitung von I_H geprüft und die Dauer der Überschreitung in einem dritten Zähler der Einrichtung 136 festgehalten.

Der dritte Zähler zeigt die Dauer T2 der Öffnung des Magnetventils 106 an, in der die zweite Gasmenge in den Airbag strömt.

Diese Vorgänge zur portionierten Abgabe von Kaltgas können mehrmals, beispielsweise n-mal, fortgesetzt werden.

In Fig. 3 ist ein Ausführungsbeispiel einer Zweidrahtschnittstelle 120, 124 zwischen Airbag-Steuergerät und Aktuator 361 mit dem Magnetventil 106 dargestellt. Das Airbag-Steuergerät ist hier nur durch die unmittelbar zum Ansteuern, Messen und Regeln notwendigen Blöcke dargestellt.

In einem die Einrichtungen 130, 136 sowie die zwischen den Einrichtungen 130, 136 und den Schnittstellen 341, 343 zwischengeschaltete Ansteuerlogik umfassenden Block der High-Side Endstufe wird, koordiniert durch die Ansteuerlogik, der Befehl eines Mikrokontrollers über die Schnittstelle 341zur Aktivierung der angeschlossenen Aktuatorik 361, eine Freigabe des Safety Controllers (SCON) vorausgesetzt in eine n-stufige Stromregelvorgabe umgesetzt.

Der Strom, der aus einer Spannung 317 (VH), in der Regel eine Energiereservespannung und/oder Batteriespannung, unter Umständen über einen Sicherheitshalbleiter in den High-Side Transistor der Einrichtung 122 geführt ist, wird in einem die Einrichtung 134 umfassenden Block gemessen. Der Strom-Messwert oder die Messwerte werden zur Stromregelung und zur Stromzählung in den Einrichtungen 130, 136 benutzt.

Der von der High-Side über den Anschlusskontakt 316 abgegebene Strom wird über eine Leitung 120 der Zweidrahtschnittstelle 120, 124 zum Aktuator 361hin und zurück zu der Low-Side Endstufe 126 nach Masse 319 geführt. Die Low-Side Endstufe 126 steht über die Schnittstellen 341, 343 ebenfalls unter Kontrolle des Mikrokontrollers sowie der Freigabeeinrichtung (SCON).

Fig. 4 zeigt einen Signalverlauf 410 eines Stroms, der sich durch Ausführen eines Verfahrens zum Betreiben eines Kaltgasgenerators gemäß einem Ausführungsbeispiel der vorliegenden Erfindung ergibt. Dabei kann es sich um ein Verfahren handeln, das unter Verwendung der anhand von Fig. 3 beschriebenen Einrichtungen ausgeführt wird.

Auf der Ordinate ist die Zeit in Mikrosekunden aufgetragen. Auf der Abszisse ist der Strom in Ampere aufgetragen. Es sind mehrere Stromschwellwerte aufgetragen. Der Wert I_H entspricht einem Strom, bei dem das Magnetventil gerade noch geöffnet bleibt. Der Wert I_ON entspricht einem Strom, bei dem das Magnetventil sicher öffnet. Der Wert I_ONd entspricht einem Strom zuzüglich einer Messtoleranz, bei dem das Magnetventil sicher öffnet (Nachweispflicht). Der Wert I_AF_min entspricht einem Mindeststrom zum sicheren, spezifiziertem Zünden der Zündeinrichtung. Der Wert I_Fmax entspricht einem maximalen Strom.

In dem Diagramm ist auch ein Stromverlauf 411 im Freilauf über die Zündeinrichtung aufgetragen.

Ferner zeigt Fig. 4 in einem weiteren Signalverlauf 412, der die Zeiten anzeigt, in denen die beispielsweise in Fig. 3 gezeigten Einrichtungen zum Bereitstellen der Betriebsspannungspotenziale, die beispielsweise als High-Side-Stufe und Low-Side-Stufe ausgeführt sein können, aktiv beziehungsweise inaktiv sind.

Zum Zeitpunkt 0 werden die Einrichtungen zum Bereitstellen der Betriebsspannungspotenziale aktiv geschaltet (High/Low-Side "on") wodurch über die Zweidrahtschnittstelle eine Spannungsdifferenz zwischen den ersten und zweiten Anschluss der Aktuatorik angelegt wird, wodurch der Strom 410 innerhalb der Zeitspanne zwischen 0 und t2 bis zu dem Wert I_Fmax ansteigt. Bei dem Strom 410 kann es sich um einen durch die Spule des Magnetventils der Aktuatorik fließenden Strom handeln. Mit Erreichen des Werts I_Fmax zum Zeitpunkt t2 werden die Einrichtungen zum Bereitstellen der Betriebsspannungspotenziale inaktiv geschaltet (High/Low-Side "off") wodurch der Strom 410 innerhalb der Zeitspanne zwischen t2 und t4 bis zu dem Wert 0 abfällt.

Zwischen den Zeitpunkten 0 bis t4 sind bezüglich des Verlaufs des Stroms 410 eine Tangente 421, ein Abschnitt 423 während dem ein Zündstrom durch die Zündeinrichtung fließt, ein Stromsteigungssprung 425 an dem die Zündpille zündet und eine Membran eines Gasbehälters öffnet, ein Abschnitt 427 eines Freilaufs über eine im Durchbruch betriebene Suppressordiode und einem zwangsgeöffneten High-Side-Schalter sowie eine weitere Tangente 429 gezeigt.

Ein Zeitraum T_AF, der bei t2 beginnt, kennzeichnet einen Zeitraum, während der Strom 411 mindestens den Wert I_AFmin zum worst case Zünden der Zündeinrichtung aufweisen könnte . Ein Zeitraum T_F, der durch den ersten Zähler erfasst wird (genaue Zählung, Stromsteigungskontrolliert), kennzeichnet ausgehend von t2 eine individuelle Zeitdauer bis zur Zündung der Zündeinrichtung. Eine Zeitdauer 430 kennzeichnet zwischen t1 und t4 einen Zeitraum, während dem das Magnetventil offen ist. Zum Zeitpunkt t4 fällt der Strom 410 unter den Wert I_H und das Magnetventil schließt.

Zwischen t3 und t4 ist das Magnetventil offen und die Zündeinrichtung hat bereits gezündet, sodass während einer Zeitspanne T1 eine erste Kaltgasmenge 441 ausströmen kann (bzw. eine zum Bypass zusätzliche Gasmenge.441).

Zum Zeitpunkt t5, der zeitlich beabstandet zu dem Zeitpunkt t4 ist, werden die Einrichtungen zum Bereitstellen der Betriebsspannungspotenziale wieder aktiv geschaltet (High/Low-Side "on") und der Strom 410 steigt mit einem Überschwinger bis zu dem Wert I_ONd an, wodurch der Strom 410 den Wert I_ON überschreitet und das Magnetventil erneut geöffnet wird. Zum Zeitpunkt t7 werden die Einrichtungen zum Bereitstellen der Betriebsspannungspotenziale inaktiv geschaltet (High/Low-Side "off") wodurch der Strom 410 bis zu dem Wert 0 abfällt. Ein Abschnitt 451 des Verlaufs des Stroms 410 kennzeichnet eine Magnetventil-Strom-Regelung.

Zum Zeitpunkt t8 fällt der Strom 410 unter den Wert I_H und das Magnetventil schließt. Zwischen t6 und t8 ist das Magnetventil offen, sodass während einer Zeitspanne T2 eine zweite Kaltgasmenge 443 ausströmen kann.

Im Folgenden wird der in Fig. 4 gezeigte Signalverlauf detailliert beschrieben. Dabei wird auf die in Fig. 3 gezeigten Elemente Bezug genommen. Im Signalverlauf nach Fig. 4 wird zum Zeitpunkt 0 die Low-Side und die High-Side angesteuert.

Im Detail wird die Low-Side wenige Mikrosekunden vor der High-Side angesteuert. Der Stromverlauf in der Zweidrahtschnittstelle richtet sich nach der Spannung VH, der Gate-Source Spannung der N-Kanal MOSFET High-Side Endstufe (ohne Charge-Pump), den Widerständen aus Hin- und Rückleitung, dem Magnetventil-Widerstand und dem Einschaltwiderstand rdson der Low-Side Endstufe, sowie nach der Induktivität des Magnetventils. Damit wird er durch eine e-Funktion beschrieben, die im dargestellten Bereich einer Geraden 421 gleichkommt.

Beispiel:

VH=33V, VGS=3V, MV_L=3mH; MV_R=2Ohm; R_hin_rück = 0.2Ohm; rdson_L=1Ohm; Tch1=3mH/3,2Ohm=937$\mu$s;

$$Ich1=(VH-VGS)/(Rhin\_rück)+MV\_R+rdson\_L) = 9.375A$$

$$I = Ich1 \times [1 - exp(-t/Tch1)] = 9.375A \times [1 - exp(-t/937\mu s)]$$

Erreicht der Strom die Regelvorgabe I_Fmax (z.B. 2.5A) wird die High-Side und die Low-Side Endstufe zum Zeitpunkt t2 abgeschaltet. Der Strom über High-und Low-Side kommutiert nun in den Freilaufkreis bestehend aus Magnetventil, Freilaufdiode und Zündpille. Die Energie im Magnetventil wird reduziert und in der Zündpille umgesetzt. Der Zündstrom der Zündpille nimmt dabei zunächst den Spitzenwert I_Fmax an und reduziert sich durch den Energieabbau im Magnetventil. Die Parameter Zündpillen-Widerstand, Magnetventil-Widerstand, Magnetventil-Induktivität sowie I_Fmax wurden so gewählt, dass nach einer kurzen Fire Zeit T_F, während der der Zündstrom fließt, die Zündpille aktiviert werden kann.

Im schlimmsten Fall soll für T_AF (all fire Zündzeit) ein Strom größer I_AF (all fire Strom) gewährleistet werden können.

Der Stromverlauf 411 im Freilauf über die Zündpille wird durch eine e-Funktion beschrieben.

Beispiel:

I(t2) = I_Fmax = 2.5A, MV_L = 3mH, MV_R=2Ohm; R_zp = 2Ohm; Tdch1=3mH/4Ohm=750$\mu$s

$$I = I\_Fmax \times [exp(-(t-t2)/Tdch1)] = 2.5A \times [exp(-(t-t2)/750\mu s)] \text{ für } t>=t2$$

Die Fire Zeit ≈T_F wird mit einem Zähler der Schrittweite 10$\mu$s bis 50$\mu$s erfasst.
Startbedingung: I >= I_Fmax und High / Low-Side "ON"
Stopbedingung: I >= I_AFmin und High / Low-Side "OFF";

Alternativ kann die genaue Zeit T_F unter Erfassung des Stromsteigungssprungs im Moment der Zündpillenaktivierung 425 als Zähler-Stoppbedingung ermittelt werden.

Mit der Aktivierung der Zündpille wird im Normalfall der Freilaufkreis unterbrochen R_zp = ∞. Der Strom in der Zündpille wird Null (t3). Da die Energie im Magnetventil immer noch nicht abgebaut ist, soll dieser Abbau über einen weiteren Freilaufkreis erfolgen. Zu diesem Zweck ist der Block mit der in Fig. 3 gezeigten Freilaufdiode 350 als Suppressordiode hinzugefügt worden. Der induktive Strom des Magnetventils wird nun, obwohl logisch ausgeschaltet durch eine Gate-Masse Verbindung, über die High-Side Endstufe (Source wird negativ), das Magnetventil und der Suppressordiode zurück nach Masse abgebaut. Dabei kann der Strom in das Betriebsspannungspotenzial VH aus der Energiereserve und oder Batterie bzw. Masse stammen:

Aus Masse stammt er, wenn unter Verwendung eines Sicherheitshalbleiters die Energiereservespannung und oder die Batteriespannung von dem Betriebsspannungspotenzial VH getrennt sind. Diese Masseanbindung erfolgt dann über eine parasitäre oder hinzugefügte Diode Dp, wie sie in Fig. 3 gezeigt ist. Der Strom im Magnetventil fällt bei einer Wahl der Freilaufdioden-Durchbruchsspannung von 24V ... 60V, typisch 27V zwischen t3 und t4 rasch ab. Der Verlauf ist wiederum eine e-Funktion.

Die Zeit ≈T1, in der die erste Gasmenge 441 in den Airbag strömt, wird durch einen Zähler mit Schrittweite 10$\mu$s .. 50$\mu$s (Vorgabe durch ein Taktsignal) erfasst.
Startbedingung: I <= I_AFmin und High / Low-Side "OFF";
Stopbedingung: I <=I_H und High / Low-Side "OFF";

Alternativ kann die Zeit T1 genau erfasst werden, wenn als Startbedingung die Stoppbedingung des Firezeit-Zählers T_F der Zündpille gebildet aus dem Steigungssprung des Stromes 410 im Zündpillen Aktivierungsmoment 425 verwendet wird.

Nach einer Wartezeit wird die High / Low-Side zum Zeitpunkt t5 erneut angesteuert (falls vorhanden ist der Sicherheitshalbleiter zwischen Energiereserve und oder VBAT ebenfalls geschlossen worden; einige Mikrosekunden vor der High / Low-Side.

Die Regelstromvorgabe für die High-Side Endstufe ist in dieser Phase auf I_ONd geändert. Sie richtet sich jetzt nach dem notwendigen ON Strom zur Aktivierung des Magnetventils.

Im Detail wird etwas höher wie notwendig geregelt, um unter Einschluss aller Toleranzen im unabhängigen Stromzählerzweig den Nachweis für einen ausreichenden Strom zum Öffnen des Magnetventils zu erbringen.

Zum Zeitpunkt t7 werden die High / Low-Side Endstufen abgeschaltet und falls vorhanden der Sicherheitshalbleiter zwischen Energiereserve und / oder VBAT.

Der Strom im Magnetventil wird nun zwischen t7 ... t8 im Freilauf abgebaut. Der Freilaufkreis entspricht dem Freilauf zwischen t3 und t4.

Die Zeit T2, in der das Magnetventil geöffnet ist und die zweite Gasmenge 443 in den Airbag strömt wird durch einen Zähler mit Schrittweite 10$\mu$s .. 50$\mu$s (Vorgabe durch ein Taktsignal) erfasst.
Startbedingung: High / Low-Side "ON" und I >= I_ON.
Stopbedingung: High / Low -Side "OFF" und I<=I_H

Der Vorgang der Ventilansteuerung kann sich im Weiteren falls für den Crash und das Airbag Design notwendig

# EP 3 010 765 B1

n mal wiederholen.

Die Zähler sind so ausgeführt, dass die einzelnen Ventilöffnungszeiten erfasst wurden. Ebenso wird die Zündpillen Fire Time T_F erfasst. Die Zählerstände sowie Start / Stopp Bedingungen können vom Mikrokontroller über die Mikrokontrollerschnittstelle ausgelesen werden.

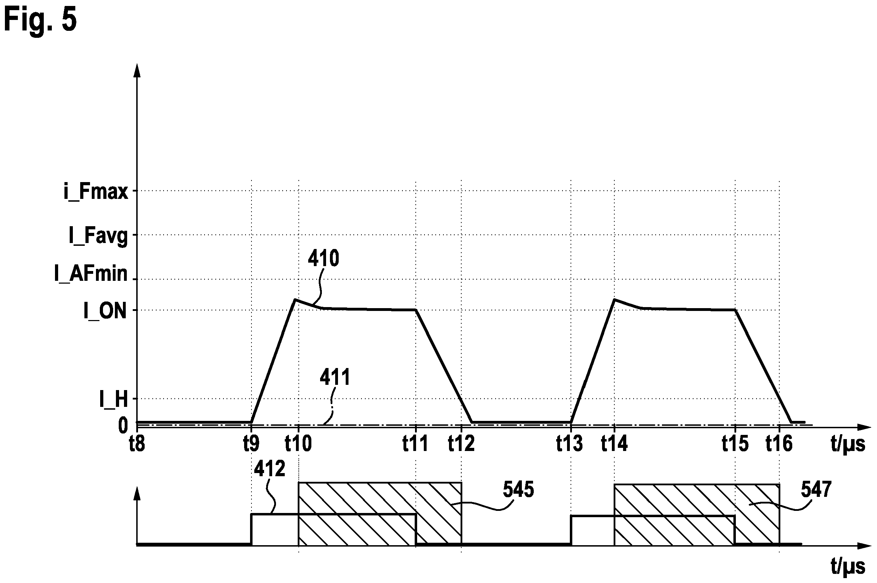

Fig. 5 zeigt einen an den in Fig. 4 gezeigten Signalverlauf anschließenden Signalverlaufs des Stroms 410 gemäß einem Ausführungsbeispiel der vorliegenden Erfindung. Gezeigt sind zwei weitere Zeiträume t9 bis t11 und t13 bis t15, während der die Einrichtungen zum Bereitstellen der Betriebsspannungspotenziale wieder aktiv geschaltet (High/Low-Side "on") sind wodurch während des Zeitraums t10 bis t12 eine dritte Kaltgasmanege 545 und während des Zeitraums t14 bis t16 eine vierte Kaltgasmanege 547 ausströmen kann.

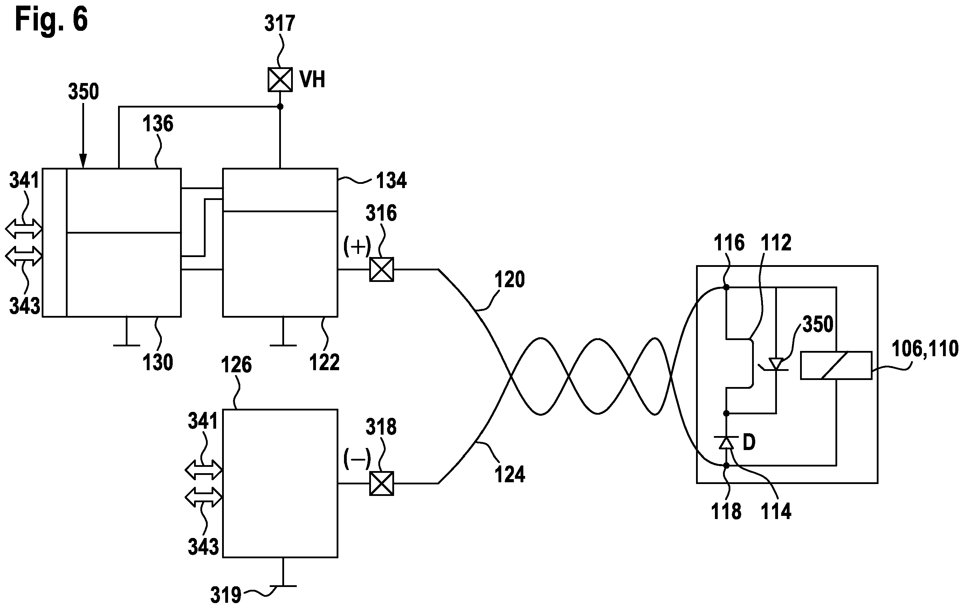

Fig. 6 zeigt eine schematische Darstellung einer Vorrichtung zum Betreiben eines Kaltgasgenerators gemäß einem Ausführungsbeispiel der vorliegenden Erfindung. Die Vorrichtung entspricht der in Fig. 3 gezeigten, mit dem Unterschied, dass die Freilaufdiode 350 nun parallel zu der Zündeinrichtung 112 geschaltet ist. Die Anode der Freilaufdiode 350 ist mit dem ersten Anschluss 116 und die Kathode der Freilaufdiode 350 ist mit der Kathode der Diode 114 verbunden. Die Diode 114 ist somit in Reihe zu der Parallelschaltung aus Freilaufdiode 350 und Zündeinrichtung 112 geschaltet.

Gemäß einem Ausführungsbeispiel zeigt Fig. 6 eine Zweidrahtschnittstelle zur Aktivierung der pyrotechnischen Membranöffnungsfunktion sowie der Ventilsteuerung zur adaptiven Durchlasssteuerung. Hier wird nach Aktivierung der Zündpille 112 (Unterbrechung) der Freilauf des Magnetventils 106 über eine externe Suppressordiode 350 fortgesetzt. Die Durchbruchsspannung von der Suppressordiode 350 liegt im Bereich von 24 ... 60V, typisch 27V. Dadurch sind High-Side Stromregler 122 verwendbar, deren Abschaltung nicht mit einer aktiven Gate-nach-Masse-Anbindung erfolgt, sondern mit einer Gate-Source Anbindung. Sonst besteht die gleiche Funktion wie im Fig.3 gezeigten Ausführungsbeispiel.

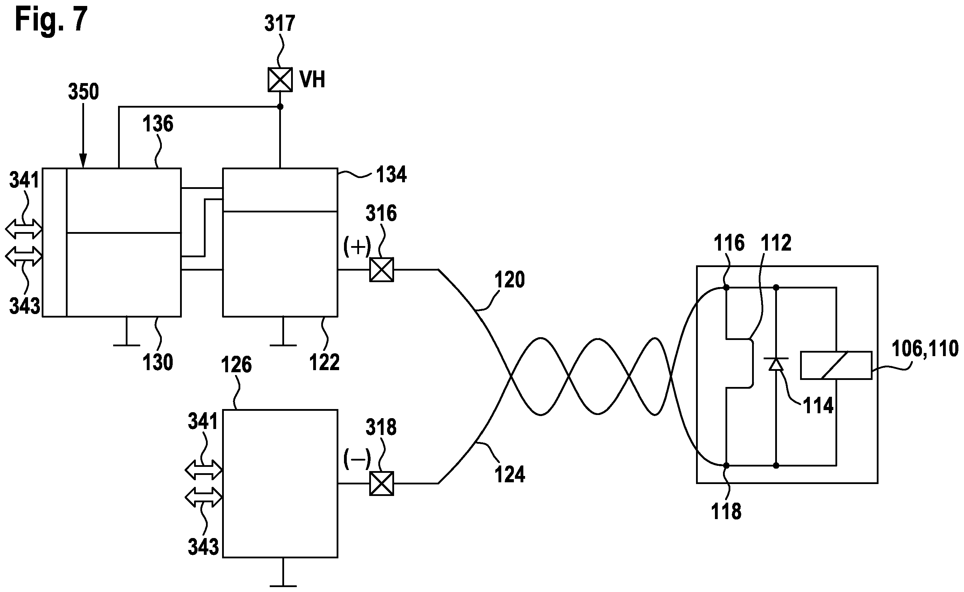

Fig. 7 zeigt eine schematische Darstellung einer Vorrichtung zum Betreiben eines Kaltgasgenerators gemäß einem Ausführungsbeispiel der vorliegenden Erfindung. Die Vorrichtung entspricht der in Fig. 3 gezeigten, Vorrichtung mit dem 5 Unterschied, dass die Diode 114 als Freilaufdiode dient. Die Diode 114 ist parallel zu der Zündeinrichtung 112 und parallel zu dem Magnetventil 106 zwischen die Anschlüsse 116, 118 geschaltet. Die Kathode der Diode 114 ist mit dem ersten Anschluss 116 und die Anode der Diode 114 ist mit dem zweiten Anschluss 118 verbunden.

Gemäß einem Ausführungsbeispiel zeigt Fig. 7 eine Zweidrahtschnittstelle zur Aktivierung der pyrotechnischen Membranöffnungsfunktion sowie der Ventilsteuerung zur adaptiven Durchlasssteuerung. Gezeigt ist ein weiteres kostengünstiges Ausführungsbeispiel, bei dem eine Zündpille zum Einsatz kommen soll, die sicher nach Aktivierung unterbricht.

Diese Anordnung hat den Vorteil der schnelleren Aktivierung der Zündpille, da zum Zünden keine Freilaufenergie des Magnetventils benötigt wird. Abfolge ist hier Zündpillenaktivierung mit High u. Low-Side "ON". Mit Unterbrechung der Zündpille erfolgt der wesentliche Stromaufbau im Magnetventil. Nach Erreichen des Stromwertes I_ON ist das Ventil geöffnet. Im Weiteren gelten die Ausführungen wie anhand von Fig. 3 beschrieben, wobei der Freilauf des Magnetventils über die Diode 114 erfolgt.

## Patentansprüche

1. Vorrichtung zum Betreiben eines Kaltgasgenerators für eine Sicherheitseinrichtung (102) für ein Fahrzeug (100), wobei der Kaltgasgenerator einen Behälter (104) zum Speichern von Gas und der Behälter (104) eine durch ein Verschlusselement (108) verschlossene Auslassöffnung für das Gas aufweist, und wobei die Vorrichtung folgende Merkmale aufweist:

einen ersten Anschluss (116) für eine erste Anschlussleitung (120) zum Bereitstellen eines ersten Betriebsspannungspotenzials (317) und einen zweiten Anschluss (118) für eine zweite Anschlussleitung (124) zum Bereitstellen eines zweiten Betriebsspannungspotenzials (319);
eine elektrische Spule (110), die ausgebildet ist, um ansprechend auf einen Spulenstrom (410) eine Verschlusseinrichtung (106) zum Steuern eines Gasflusses durch die Auslassöffnung zu betätigen, wobei die Spule (110) einen ersten Spulenkontakt und einen zweiten Spulenkontakt aufweist und zwischen den ersten Anschluss (116) und den zweiten Anschluss (118) geschaltet ist;
eine Zündeinrichtung (112), die ausgebildet ist, um ansprechend auf einen Zündstrom (411) zu zünden, um das Verschlusselement (108) zu öffnen, wobei die Zündeinrichtung (112) einen ersten Zündkontakt und einen zweiten Zündkontakt aufweist und zwischen den ersten Anschluss (116) und den zweiten Anschluss (118) geschaltet ist; und
eine Diode (114) mit einem Anodenkontakt und einem Kathodenkontakt, wobei die Diode (114) parallel oder in Reihe zu der Zündeinrichtung (112) zwischen den ersten Anschluss (116) und den zweiten Anschluss (118) geschaltet ist,
**dadurch gekennzeichnet, dass**
die Vorrichtung eine Erfassungseinrichtung (134) aufweist, die ausgebildet ist, um einen Wert eines durch den ersten Anschluss fließenden Stroms zu erfassen, eine Einstelleinrichtung (130) aufweist, die ausgebildet ist, um den Strom abhängig von dem Wert einzustellen, und eine Ermittlungseinrichtung (136) aufweist, die ausgebildet ist, um abhängig von dem Wert eine Zeitdauer (T1) zu ermitteln, während der das Verschlusselement (108) und die Verschlusseinrichtung (106) die Auslassöffnung freigeben, um Gas durch die Auslassöffnung ausströmen zu lassen, wobei die Einstelleinrichtung (130) ausgebildet ist, um den ersten Anschluss (116) über die erste Anschlussleitung (120) mit dem ersten Betriebsspannungspotenzial (317) und den zweiten Anschluss (118) über die zweite Anschlussleitung (124) mit dem zweiten Betriebsspannungspotenzial (319) zu verbinden, bis der Wert des Stroms einen maximalen Schwellwert (I_Fmax) erreicht, und die ausgebildet ist, um den ersten Anschluss (116) von dem ersten Betriebsspannungspotenzial (317) und den zweiten Anschluss (118) von dem zweiten Betriebsspannungspotenzial (319) zu trennen, nachdem der Wert des Stroms den maximalen Schwellwert (I_Fmax) erreicht hat.

2.  Vorrichtung gemäß Anspruch 1, bei der die Diode (114) und die Zündeinrichtung (112) in Reihe zwischen dem zweiten Anschluss (118) und dem ersten Anschluss (116) geschaltet sind, und mit einer weiteren Diode (350), die zwischen einem mit der zweiten Anschlussleitung (124) verbundenen Anschlusskontakt (318) und einer Einrichtung (126) zum Bereitstellen des zweiten Betriebsspannungspotenzials (319) mit dem Anodenanschluss der Diode (350) an Masse geschaltet ist.

3.  Vorrichtung gemäß Anspruch 2, bei der die Diode (114) und die Zündeinrichtung (112) in Reihe zwischen dem zweiten Anschluss (118) und dem ersten Anschluss (116) geschaltet sind, und mit einer weiteren Diode (350), die parallel zu der Zündeinrichtung (112) und in Serie zu der Diode (114) geschaltet ist, wobei die Anode der weiteren Diode (350) mit dem ersten Zündkontakt der Zündeinrichtung (112) und dem ersten Anschluss (116) verbunden ist.

4.  Vorrichtung gemäß einem der vorangegangenen Ansprüche, bei dem die Spule (110) ausgebildet ist, um nachdem der Wert des Stroms den maximalen Schwellwert (I_Fmax) erreicht und der erste Anschluss (116) von dem ersten Betriebsspannungspotenzial (317) und der zweite Anschluss (118) von dem zweiten Betriebsspannungspotenzial (319) getrennt wurde, den Zündstrom (411) zum Zünden der Zündeinrichtung (112) bereitzustellen.

5.  Vorrichtung gemäß einem der vorangegangenen Ansprüche, bei dem die Einstelleinrichtung (130) ausgebildet ist, um ansprechend auf ein Öffnungssignal den ersten Anschluss (116) über die erste Anschlussleitung (120) mit dem ersten Betriebsspannungspotenzial (317) und den zweiten Anschluss (118) über die zweite Anschlussleitung (124) mit dem zweiten Betriebsspannungspotenzial (319) zumindest einmal erneut zu verbinden, nachdem der Wert des Stroms bis unter einem Schwellwert (I_H) für den Spulenstrom zum Betätigen der Verschlusseinrichtung abgefallen ist.

6.  Sicherheitsvorrichtung für ein Fahrzeug (100), mit folgenden Merkmalen:

    einem Kaltgasgenerator mit einem Behälter (104) zum Speichern von Gas, wobei der Behälter (104) eine durch ein Verschlusselement (108) verschlossen Auslassöffnung für das Gas aufweist;
    einer Verschlusseinrichtung (106) zum Steuern eines Gasflusses durch die Auslassöffnung des Behälters (104); und
    einer Vorrichtung gemäß einem der vorangegangenen Ansprüche zum Betreiben des Kaltgasgenerators, wobei die Spule (110) der Vorrichtung ausgebildet ist, um die Verschlusseinrichtung (106) zu betätigen.

7.  Sicherheitsvorrichtung gemäß Anspruch 6 mit einem Bypass, der einen Gas-Basisdurchsatz aus dem Behälter (104) bei geöffnetem Verschlusselement (108) zulässt.

8.  Verfahren zum Steuern einer Vorrichtung zum Betreiben eines Kaltgasgenerators für eine Sicherheitseinrichtung (102) für ein Fahrzeug (100), wobei der Kaltgasgenerator einen Behälter (104) zum Speichern von Gas und der Behälter (104) eine durch ein Verschlusselement (108) verschlossene Auslassöffnung für das Gas aufweist, und wobei die Vorrichtung einen ersten Anschluss (116) für eine erste Anschlussleitung (120) zum Bereitstellen eines ersten Betriebsspannungspotenzials (317) und einen zweiten Anschluss (118) für eine zweite Anschlussleitung (124) zum Bereitstellen eines zweiten Betriebsspannungspotenzials (319), eine elektrische Spule (110), die ausgebildet ist, um ansprechend auf einen Spulenstrom (410) eine Verschlusseinrichtung (106) zum Steuern eines Gasflusses durch die Auslassöffnung zu betätigen, wobei die Spule (110) einen ersten Spulenkontakt und einen zweiten Spulenkontakt aufweist und zwischen den ersten Anschluss (116) und den zweiten Anschluss (118) geschaltet ist, eine Zündeinrichtung (112), die ausgebildet ist, um ansprechend auf einen Zündstrom (411) zu zünden, um das Verschlusselement (108) zu öffnen, wobei die Zündeinrichtung (112) einen ersten Zündkontakt und einen zweiten Zündkontakt aufweist und zwischen den ersten Anschluss (116) und den zweiten Anschluss (118) geschaltet ist, und eine Diode (114) mit einem Anodenkontakt und einem Kathodenkontakt, wobei die Diode (114) parallel oder in Reihe zu der Zündeinrichtung (112) zwischen den ersten Anschluss (116) und den zweiten Anschluss (118) geschaltet ist, aufweist, und wobei das Verfahren die folgenden Schritte aufweist:

Verbinden (201) des ersten Anschlusses (116) mit dem ersten Betriebsspannungspotenzial (317) und des zweiten Anschlusses (118) mit dem zweiten Betriebsspannungspotenzial (319), um einen Fluss eines Stroms zwischen dem ersten Anschluss (116) und dem zweiten Anschluss (118) zu erzeugen, wobei der Fluss des Stroms zum Aktivieren der durch die Spule (110) betätigbaren Verschlusseinrichtung (106) führt; und

Trennen (203) des ersten Anschlusses (116) von dem ersten Betriebsspannungspotenzial (317) und des zweiten Anschlusses (118) von dem zweiten Betriebsspannungspotenzial (319), nachdem ein Wert des Stroms einen maximalen Schwellwert (I_Fmax) erreicht hat, um einen Fluss des Zündstroms durch die Zündeinrichtung (112) zu ermöglichen, wobei ein von der Spule (110) induzierter Strom als der Zündstrom durch die Zündeinrichtung (112) geleitet wird.

9. Verfahren gemäß Anspruch 8, bei dem der Schritt des Verbindens durchgeführt wird, durch Verbinden, insbesondere galvanisch oder insbesondere durch Ansteuerung eines High Side Stromreglers, insbesondere eines Transistors (122) und eines Low Side Stromreglers, insbesondere eines Transistors (201), des ersten Anschlusses (116) mit dem ersten Betriebsspannungspotenzial (317) und des zweiten Anschlusses (118) mit dem zweiten Betriebsspannungspotenzial (319), um einen Fluss eines Stroms zwischen dem ersten Anschluss (116) und dem zweiten Anschluss (118) zu erzeugen, und bei dem der Schritt des Trennens durchgeführt wird durch Trennen, insbesondere galvanisch oder insbesondere durch Sperren, beispielsweise durch eine Verbindung eines Gate Anschlusses an das zweite Bezugspotenzial (319) des High Side Stromreglers, insbesondere Transistors (122) und eine Verbindung eines Gate Anschlusses an das zweite Bezugspotenzial (319) des Low Side Stromreglers, insbesondere Transistors (126), nachdem ein Wert des Stroms einen maximalen Schwellwert (I_Fmax) erreicht hat, um einen Fluss des Zündstroms durch die Zündeinrichtung (112) durch Kommutierung des Spulenstromes in einen ersten Freilaufkreis, bestehend aus der Spule (110), der Diode (114) und der Zündeinrichtung (112), zu ermöglichen der ausreicht um das Zündelement (112) zu zünden.

## Claims

1. Apparatus for operating a cold gas generator for a safety device (102) for a vehicle (100), wherein the cold gas generator has a tank (104) for storing gas and the tank (104) has an outlet opening for the gas, which outlet opening is closed by a closure element (108), and wherein the apparatus has the following features:

a first connection (116) for a first connection line (120) for providing a first operating voltage potential (317) and a second connection (118) for a second connection line (124) for providing a second operating voltage potential (319);

an electrical coil (110), which is configured, in response to a coil current (410), to actuate a closure device (106) for controlling a flow of gas through the outlet opening, wherein the coil (110) has a first coil contact and a second coil contact and is connected between the first connection (116) and the second connection (118);

an ignition device (112), which is configured to ignite in response to an ignition current (411) in order to open the closure element (108), wherein the ignition device (112) has a first ignition contact and a second ignition contact and is connected between the first connection (116) and the second connection (118); and

a diode (114) having an anode contact and a cathode contact, wherein the diode (114) is connected in parallel or in series with the ignition device (112) between the first connection (116) and the second connection (118), **characterized in that**

the apparatus has a detection device (134), which is configured to detect a value of a current flowing through the first connection, an adjustment device (130), which is configured to adjust the current depending on the value, and a determination device (136), which is configured to determine a period (T1) depending on the value, during which period the closure element (108) and the closure device (106) release the outlet opening in order to allow gas to flow out through the outlet opening, wherein the adjustment device (130) is configured to connect the first connection (116) to the first operating voltage potential (317) via the first connection line (120) and to connect the second connection (118) to the second operating voltage potential (319) via the second connection line (124) until the value of the current reaches a maximum threshold value (I_Fmax) and is configured to isolate the first connection (116) from the first operating voltage potential (317) and to isolate the second connection (118) from the second operating voltage potential (319) after the value of the current has reached the maximum threshold value (I_Fmax).

2. Apparatus according to Claim 1, in which the diode (114) and the ignition device (112) are connected in series between the second connection (118) and the first connection (116), and having a further diode (350), which is connected, between a connection contact (318), which is connected to the second connection line (124), and a device (126) for providing the second operating voltage potential (319), to earth by way of the anode connection of the diode (350).

3. Apparatus according to Claim 2, in which the diode (114) and the ignition device (112) are connected in series between the second connection (118) and the first connection (116), and having a further diode (350), which is connected in parallel with the ignition device (112) and in series with the diode (114), wherein the anode of the further diode (350) is connected to the first ignition contact of the ignition device (112) and the first connection (116).

4. Apparatus according to one of the preceding claims, in which the coil (110) is configured to provide the ignition current (411) for igniting the ignition device (112) after the value of the current has reached the maximum threshold value (I_Fmax) and the first connection (116) has been isolated from the first operating voltage potential (317) and the second connection (118) has been isolated from the second operating voltage potential (319).

5. Apparatus according to one of the preceding claims, in which the adjustment device (130) is configured, in response to an opening signal, to connect the first connection (116) to the first operating voltage potential (317) via the first connection line (120) and to connect the second connection (118) to the second operating voltage potential (319) via the second connection line (124) at least once more after the value of the current has fallen to below a threshold value (I_H) for the coil current for actuating the closure device.

6. Safety apparatus for a vehicle (100), having the following features:

a cold gas generator having a tank (104) for storing gas, wherein the tank (104) has an outlet opening for the gas, which outlet opening is closed by a closure element (108);
a closure device (106) for controlling a flow of gas through the outlet opening of the tank (104); and
an apparatus according to one of the preceding claims for operating the cold gas generator, wherein the coil (110) of the apparatus is configured to actuate the closure device (106).

7. Safety apparatus according to Claim 6 having a bypass, which allows a base gas throughput from the tank (104) when the closure element (108) is open.

8. Method for controlling an apparatus for operating a cold gas generator for a safety device (102) for a vehicle (100), wherein the cold gas generator has a tank (104) for storing gas and the tank (104) has an outlet opening for the gas, which outlet opening is closed by a closure element (108), and wherein the apparatus has a first connection (116) for a first connection line (120) for providing a first operating voltage potential (317) and a second connection (118) for a second connection line (124) for providing a second operating voltage potential (319), an electrical coil (110), which is configured, in response to a coil current (410), to actuate a closure device (106) for controlling a flow of gas through the outlet opening, wherein the coil (110) has a first coil contact and a second coil contact and is connected between the first connection (116) and the second connection (118), an ignition device (112), which is configured to ignite in response to an ignition current (411) in order to open the closure element (108), wherein the ignition device (112) has a first ignition contact and a second ignition contact and is connected between the first connection (116) and the second connection (118), and a diode (114) having an anode contact and a cathode contact, wherein the diode (114) is connected in parallel or in series with the ignition device (112) between the first connection (116) and the second connection (118), and wherein the method has the following steps:

connection (201) of the first connection (116) to the first operating voltage potential (317) and of the second connection (118) to the second operating voltage potential (319) in order to generate a flow of current between the first connection (116) and the second connection (118), wherein the flow of current leads to activation of the closure device (106) that can be actuated by the coil (110); and
isolation (203) of the first connection (116) from the first operating voltage potential (317) and of the second connection (118) from the second operating voltage potential (319) after a value of the current has reached a maximum threshold value (I_Fmax) in order to enable a flow of the ignition current through the ignition device (112), wherein a current induced by the coil (110) is conducted as the ignition current through the ignition device (112).

9. Method according to Claim 8, in which the step of connection is carried out through connection, in particular galvanically, or, in particular, through driving of a high-side current regulator, in particular a transistor (122), and a low-side current regulator, in particular a transistor (201), of the first connection (116) to the first operating voltage potential (317) and of the second connection (118) to the second operating voltage potential (319) in order to generate a flow of current between the first connection (116) and the second connection (118), and in which the step of isolation is carried out through isolation, in particular galvanically or, in particular, through blocking, for example by connecting a gate terminal to the second reference potential (319) of the high-side current regulator, in particular transistor (122) and connecting a gate terminal to the second reference potential (319) of the low-side current regulator, in particular transistor (126), after a value of the current has reached a maximum threshold value (I_Fmax) in order to enable a flow of the ignition current through the ignition device (112) through commutation of the coil current into a first freewheeling circuit, consisting of the coil (110), the diode (114) and the ignition device (112), which flow of ignition current is sufficient to ignite the ignition element (112).

## Revendications

1. Arrangement pour faire fonctionner un générateur de gaz froid pour un dispositif de sécurité (102) pour un véhicule (100), le générateur de gaz froid possédant un réservoir (104) destiné à stocker du gaz et le réservoir (104) possédant une ouverture de sortie pour le gaz fermée par un élément de fermeture (108), l'arrangement possédant les caractéristiques suivantes :

   une première borne (116) pour une première ligne de raccordement (120) destinée à fournir un premier potentiel de tension de service (317) et une deuxième borne (118) pour une deuxième ligne de raccordement (124) destinée à fournir un deuxième potentiel de tension de service (319) ;
   une bobine électrique (110) qui est configurée pour, en réaction à un courant de bobine (410), actionner un dispositif de fermeture (106) en vue de commander un débit de gaz à travers l'ouverture de sortie, la bobine (110) possédant un premier contact de bobine et un deuxième contact de bobine et étant branchée entre la première borne (116) et la deuxième borne (118) ;
   un dispositif d'amorçage (112) qui est configuré pour s'amorcer en réaction à un courant d'amorçage (411) afin d'ouvrir l'élément de fermeture (108), le dispositif d'amorçage (112) possédant un premier contact d'amorçage et un deuxième contact d'amorçage et étant branché entre la première borne (116) et la deuxième borne (118) ; et
   une diode (114) dotée d'un contact d'anode et d'un contact de cathode, la diode (114) étant branchée en parallèle ou en série avec le dispositif d'amorçage (112) entre la première borne (116) et la deuxième borne (118),
   **caractérisé en ce que**
   l'arrangement possède un dispositif de détection (134) qui est configuré pour détecter une valeur d'un courant qui circule à travers la première borne, possède un dispositif de réglage (130) qui est configuré pour régler le courant en fonction de la valeur, et possède un dispositif de détermination (136) qui est configuré pour déterminer une durée (T1) en fonction de la valeur, pendant laquelle l'élément de fermeture (108) et le dispositif de fermeture (106) libèrent l'ouverture de sortie afin de laisser le gaz s'écouler à travers l'ouverture de sortie, le dispositif de réglage (130) étant configuré pour relier la première borne (116) au premier potentiel de tension de service (317) par le biais de la première ligne de raccordement (120) et la deuxième borne (118) au deuxième potentiel de tension de service (319) par le biais de la deuxième ligne de raccordement (124) jusqu'à ce que la valeur du courant atteigne une valeur de seuil maximale (I_Fmax), et qui est configuré pour déconnecter la première borne (116) du premier potentiel de tension de service (317) et la deuxième borne (118) du deuxième potentiel de tension de service (319) après que la valeur du courant ait atteint la valeur de seuil maximale (I_Fmax).

2. Arrangement selon la revendication 1, avec lequel la diode (114) et le dispositif d'amorçage (112) sont branchés en série entre la première borne (116) et la deuxième borne (118), et comprenant une diode supplémentaire (350) qui est branchée entre un contact de raccordement (318) relié à la deuxième ligne de raccordement (124) et un dispositif (126) servant à fournir le deuxième potentiel de tension de service (319) avec la borne d'anode de la diode (350) à la masse.

3. Arrangement selon la revendication 2, avec lequel la diode (114) et le dispositif d'amorçage (112) sont branchés en série entre la première borne (116) et la deuxième borne (118), et comprenant une diode supplémentaire (350) qui est branchée en parallèle avec le dispositif d'amorçage (112) et en série avec la diode (114), l'anode de la diode supplémentaire (350) étant reliée au premier contact d'amorçage du dispositif d'amorçage (112) et à la première borne (116).

4. Arrangement selon l'une des revendications précédentes, avec lequel la bobine (110) est configurée pour fournir le courant d'amorçage (411) destiné à amorcer le dispositif d'amorçage (112) après que la valeur du courant ait atteint la valeur de seuil maximale (I_Fmax) et que la première borne (116) ait été déconnectée du premier potentiel de tension de service (317) et la deuxième borne (118) du deuxième potentiel de tension de service (319).

5. Arrangement selon l'une des revendications précédentes, avec lequel le dispositif de réglage (130) est configuré pour, en réaction à un signal d'ouverture, relier une nouvelle fois la première borne (116) au premier potentiel de tension de service (317) par le biais de la première ligne de raccordement (120) et la deuxième borne (118) au deuxième potentiel de tension de service (319) par le biais de la deuxième ligne de raccordement (124) après que la valeur du courant ait chuté jusqu'au-dessous d'une valeur de seuil (I_H) pour le courant de bobine en vue de l'actionnement du dispositif de fermeture.

6. Arrangement de sécurité pour un véhicule (100), comprenant les caractéristiques suivantes :

   un générateur de gaz froid comprenant un réservoir (104) destiné à stocker du gaz, le réservoir (104) possédant une ouverture de sortie pour le gaz fermée par un élément de fermeture (108) ;
   un dispositif de fermeture (106) destiné à commander un débit de gaz à travers l'ouverture de sortie du réservoir (104) ; et
   un arrangement selon l'une des revendications précédentes pour faire fonctionner générateur de gaz froid, la bobine (110) de l'arrangement étant configurée pour actionner le dispositif de fermeture (106) .

7. Arrangement de sécurité selon la revendication 6, comprenant une dérivation qui autorise un débit de base depuis le réservoir (104) lorsque l'élément de fermeture (108) est ouvert.

8. Procédé pour commander un arrangement pour faire fonctionner un générateur de gaz froid pour un dispositif de sécurité (102) pour un véhicule (100), le générateur de gaz froid possédant un réservoir (104) destiné à stocker du gaz et le réservoir (104) possédant une ouverture de sortie pour le gaz fermée par un élément de fermeture (108), et l'arrangement possédant une première borne (116) pour une première ligne de raccordement (120) destinée à fournir un premier potentiel de tension de service (317) et une deuxième borne (118) pour une deuxième ligne de raccordement (124) destinée à fournir un deuxième potentiel de tension de service (319), une bobine électrique (110) qui est configurée pour, en réaction à un courant de bobine (410), actionner un dispositif de fermeture (106) en vue de commander un débit de gaz à travers l'ouverture de sortie, la bobine (110) possédant un premier contact de bobine et un deuxième contact de bobine et étant branchée entre la première borne (116) et la deuxième borne (118), un dispositif d'amorçage (112) qui est configuré pour s'amorcer en réaction à un courant d'amorçage (411) afin d'ouvrir l'élément de fermeture (108), le dispositif d'amorçage (112) possédant un premier contact d'amorçage et un deuxième contact d'amorçage et étant branché entre la première borne (116) et la deuxième borne (118), et une diode (114) dotée d'un contact d'anode et d'un contact de cathode, la diode (114) étant branchée en parallèle ou en série avec le dispositif d'amorçage (112) entre la première borne (116) et la deuxième borne (118), et le procédé comprenant les étapes suivantes :

   connexion (201) de la première borne (116) au premier potentiel de tension de service (317) et de la deuxième borne (118) au deuxième potentiel de tension de service (319) afin de produire un flux d'un courant entre la première borne (116) et la deuxième borne (118), le flux de courant produisant l'activation du dispositif de fermeture (106) qui peut être actionné par la bobine (110) ; et
   déconnexion (203) de la première borne (116) du premier potentiel de tension de service (317) et de la deuxième borne (118) du deuxième potentiel de tension de service (319) après qu'une valeur du courant ait atteint une valeur de seuil maximale (I_Fmax), afin de permettre un flux du courant d'amorçage à travers le dispositif d'amorçage (112), un courant induit par la bobine (110) étant conduit en tant que courant d'amorçage à travers le dispositif d'amorçage (112).

9. Procédé selon la revendication 8, selon lequel l'étape de connexion est exécutée en reliant, notamment galvaniquement ou notamment par excitation d'un régulateur de courant côté haut, notamment d'un transistor (122), et d'un régulateur de courant côté bas, notamment d'un transistor (201), la première borne (116) au premier potentiel de tension de service (317) et la deuxième borne (118) au deuxième potentiel de tension de service (319) afin de générer un flux d'un courant entre la première borne (116) et la deuxième borne (118), et selon lequel l'étape de déconnexion est exécutée en déconnectant, notamment galvaniquement ou notamment par blocage, par exemple par une connexion d'une borne de gâchette au deuxième potentiel de tension de service (319) du régulateur de courant côté haut, notamment du transistor (122), et une connexion d'une borne de gâchette au deuxième potentiel de tension de service (319) du régulateur de courant côté bas, notamment du transistor (126), après qu'une valeur du courant ait atteint une valeur de seuil maximale (I_Fmax), afin de permettre un flux du courant d'amorçage à travers le dispositif d'amorçage (112) par commutation du courant de bobine dans un premier circuit de roue libre, composé de la bobine (110), de la diode (114) et du dispositif d'amorçage (112), lequel est suffisant pour amorcer l'élément d'amorçage (112) .

# Fig. 1

# Fig. 2

201 [ ]

203 [ ]

**Fig. 3**

Fig. 4

Fig. 5

EP 3 010 765 B1

Fig. 6

# Fig. 7

EP 3 010 765 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011087077 A1
- US 5820162 A
- US 5796177 A